# EUROPEAN PATENT APPLICATION

(11) **EP 4 852 591 A1**
(43) Date of publication of application: **09.12.2026**
(21) Application number: 24922130.0
(22) Date of filing: 07.11.2024
(51) Int. Cl.: H04W 72/50, H04W 72/0446, H04W 72/0453, H04W 74/0833

(54) **TERMINAL, BASE STATION, AND COMMUNICATION METHOD**

(30) Priority: 31.01.2024 JP 2024013292
(71) Applicant: Panasonic Intellectual Property Corporation of America, Torrance, CA 90504 (US)
(72) Inventor: NUNOME, Tomoya, Kadoma-shi, Osaka 571-0057 (JP); SUZUKI, Hidetoshi, Kadoma-shi, Osaka 571-0057 (JP); TRAN, Xuan Tuong, Singapore 469332 (SG); HORIUCHI, Ayako, Kadoma-shi, Osaka 571-0057 (JP)
(74) Representative: Grünecker Patent- und Rechtsanwälte PartG mbB
(86) International application number: PCT/JP2024/039682
(87) International publication number: WO 2025/164020

(57) **Abstract**

This terminal is provided with: a control circuit that, in a plurality of time resources including a first time resource in which a frequency band is divided into a plurality of bands, selects a random access channel transmission opportunity on the basis of a threshold value for received electric power; and a transmission circuit that transmits a random access channel signal using the transmission opportunity.

## Description

### Technical Field

The present disclosure relates to a terminal, a base station, and a communication method.

### Background Art

In 3rd Generation Partnership Project (3GPP), the specification of the physical layer in Release 18 New Radio access technology (NR) has been completed as a functional extension of 5th Generation mobile communication systems (5G). NR supports functions for realizing Ultra Reliable and Low Latency Communication (URLLC) in addition to enhanced Mobile Broadband (eMBB) to satisfy requirements of high speed and high capacity (see, e.g., Non-Patent Literatures (hereinafter referred to as "NPLs") 1 to 6).

### Citation List

### Non-Patent Document

NPL 1
   3GPP TS 38.211 V18.1.0, "NR; Physical channels and modulation (Release 18)," December 2023
NPL 2
   3GPP TS 38.212 V18.1.0, "NR; Multiplexing and channel coding (Release 18)," December 2023
NPL 3
   3GPP TS 38.213 V18.1.0, "NR; Physical layer procedure for control (Release 18)," December 2023
NPL 4
   3GPP TS 38.214 V18.1.0, "NR; Physical layer procedures for data (Release 18)," December 2023
NPL 5
   3GPP TS 38.215 V18.1.0, "NR; Physical layer measurements (Release 18)," December 2023
NPL 6
   3GPP TS 38.331 V18.0.0, "NR; Radio Resource Control (RRC) protocol specification (Release 18)," December 2023

### Summary of Invention

However, there is room for consideration regarding a method for resource selection of a random access channel.

One non-limiting embodiment of the present disclosure facilitates providing a terminal, a base station, and a communication method each capable of improving the efficiency of resource selection of a random access channel.

A terminal according to an embodiment of the present disclosure includes: control circuitry, which, in operation, selects, in a plurality of time resources including a first time resource having a frequency band divided into a plurality of bands, a transmission opportunity of a random access channel based on a threshold for received power; and transmission circuitry, which, in operation, transmits a signal of the random access channel using the transmission opportunity.

It should be noted that general or specific embodiments may be implemented as a system, an apparatus, a method, an integrated circuit, a computer program, a storage medium, or any selective combination thereof.

According to an embodiment of the present disclosure, resource selection of a random access channel can be appropriately performed.

Additional benefits and advantages of the disclosed embodiment will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

[FIG. 1] FIG. 1 illustrates examples of a Duplex system.
[FIG. 2] FIG. 2 is a diagram illustrating an example of Dynamic Subband non-overlapping full duplex (SBFD).
[FIG. 3] FIG. 3 is a block diagram illustrating a configuration example of a part of a base station.
[FIG. 4] FIG. 4 is a block diagram illustrating a configuration example of a part of a terminal.
[FIG. 5] FIG. 5 is a block diagram illustrating a configuration example of a base station.
[FIG. 6] FIG. 6 is a block diagram illustrating a configuration example of a terminal.
[FIG. 7] FIG. 7 is a sequence diagram illustrating exemplary operations of a base station and a terminal.
[FIG. 8] FIG. 8 is a diagram illustrating an example of selection of Physical Random Access Channel (PRACH) resources.
[FIG. 9] FIG. 9 is a diagram illustrating an example of arrangement of Random Access Channel occasions (ROs).
[FIG. 10] FIG. 10 is a diagram illustrating an example of selection of a PRACH resource.
[FIG. 11] FIG. 11 is a diagram illustrating an example of selection of a PRACH resource.
[FIG. 12] FIG. 12 is a diagram illustrating an example of selection of a PRACH resource.
[FIG. 13] FIG. 13 is a diagram illustrating an example of the arrangement of ROs.
[FIG. 14] FIG. 14 is a diagram illustrating an example of a configuration.
[FIG. 15] FIG. 15 is a diagram illustrating an example of the arrangement of ROs.
[FIG. 16] FIG. 16 is a diagram of an exemplary architecture of a 3GPP NR system.
[FIG. 17] FIG. 17 is a diagram of an exemplary functional split in 5G O-RAN.

### Description of Embodiments

Hereinafter, embodiments of the present disclosure will be described in detail with reference to the accompanying drawings.

### [Regarding Subband Non-Overlapping Full Duplex (SBFD)]

As a Study Item of Release 18, "Study on evolution of NR duplex operation" has been discussed. One of the main topics of the Study Item includes support for subband non-overlapping full duplex (SBFD, also referred to as Cross Division Duplex (XDD)).

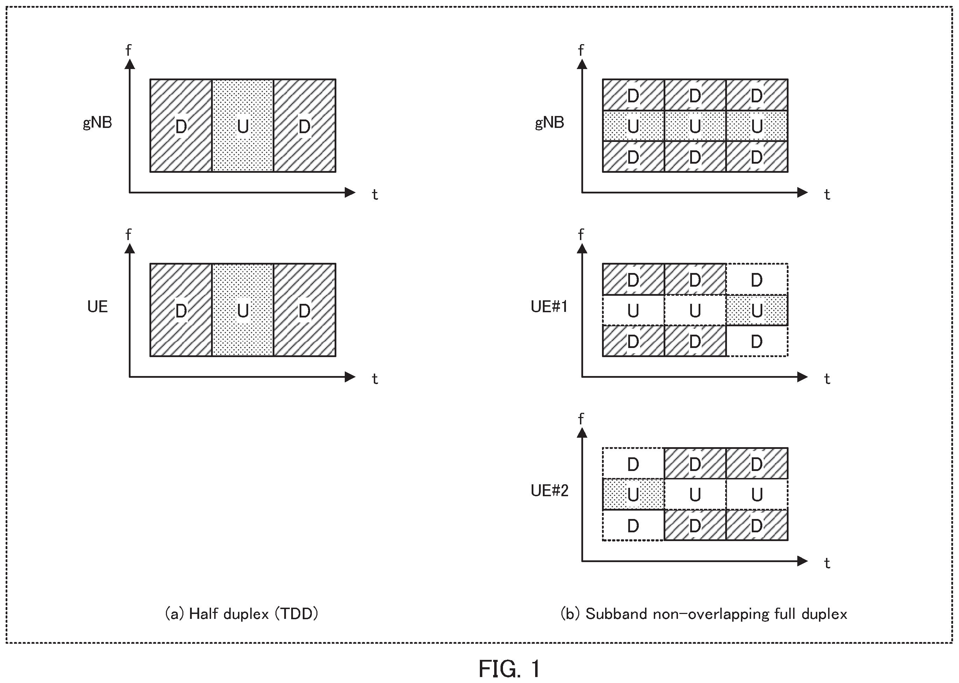

FIG. 1 illustrates examples of a Duplex system. In FIG. 1, a vertical axis represents frequency, and a horizontal axis represents time. Further, "U" indicates uplink transmission and "D" indicates downlink transmission in FIG. 1.

In FIG. 1, part (a) illustrates an example of Time Division Duplex (TDD) in half duplex. In part (a) of FIG. 1, a terminal (e.g., also referred to as user equipment (UE)) is a terminal connected to a base station (e.g., also referred to as gNB). In the half duplex illustrated in part (a) of FIG. 1, the transmission direction (e.g., downlink or uplink) in a certain time resource may be common between the base station and the terminal. For example, the transmission direction is not different between terminals in a certain time resource.

In FIG. 1, part (b) illustrates an example of SBFD. In SBFD, a frequency resource (or frequency band) is divided into multiple bands (also referred to, for example, as subbands, RB sets, sub-bands, sub-BandWidth Parts (sub-BWPs)), and transmission in different directions (e.g., downlink or uplink) in units of subbands is supported. Note that, in SBFD, a terminal performs either uplink transmission or downlink reception in a certain time resource, and does not perform transmission and reception in the other direction. In contrast, in SBFD, the base station can simultaneously transmit and receive both the uplink and the downlink. Note that there may be a case where a terminal does not use a resource in the transmission direction in a certain time resource (e.g., a resource indicated by a broken line in part (b) of FIG. 1).

Although omitted in FIG. 1, a guard band may be arranged between an uplink subband (UL subband: U) and a downlink subband (DL subband: D). The guard band may be used to reduce interference between different transmission directions (links) (cross link interference (CLI)).

In the following description, a symbol in which an operation or control of SBFD is performed is referred to as an "SBFD symbol." Further, a symbol in which an operation or control of SBFD is not performed (e.g., a symbol different from the SBFD symbol) may be referred to as a "non-SBFD symbol." Further, for example, a slot composed of SBFD symbols may be referred to as an "SBFD slot," and a slot composed of a non-SBFD symbol may be referred to as a "non-SBFD slot."

Further, a subband configuration is denoted as {X ... X}. X represents a UL subband (U) or a DL subband (D). The order of notation corresponds to the order of arrangement of the subbands. For example, the subband configuration at part (b) in FIG. 1 is denoted as {DUD}.

### [Regarding SBFD symbols and SBFD-aware terminal]

An SBFD symbol may be configured using (e.g., by changing) a legacy symbol (existing symbol) such as a DL symbol, a UL symbol, or a Flexible symbol. For example, an SBFD symbol may be configured using a DL symbol. A legacy symbol is configured by, for example, RRC signaling (e.g., TDD-UL-DL-ConfigCommon). Here, the non-SBFD symbol is, for example, a symbol that is not an SBFD symbol (e.g., a legacy symbol and not used as an SBFD symbol).

An SBFD-aware terminal (e.g., SBFD-aware UE) is a terminal that supports operation and control of SBFD. The SBFD-aware terminal is capable of acquiring configurations related to SBFD, such as positions of subbands in the frequency domain and the time domain. A non-SBFD-aware terminal (e.g., non-SBFD-aware UE) is a terminal that does not support operation and control of SBFD. The non-SBFD-aware terminal does not recognize an SBFD symbol, for example, and thus even when a legacy symbol is configured (or changed) to an SBFD symbol, operates while recognizing the symbol as a legacy symbol.

### [Regarding Random Access Channel (RACH) transmission on SBFD symbol]

For example, when a DL symbol is used as an SBFD symbol, an SBFD-aware terminal can use an SBFD subband as an UL resource. Thus, in a case of supporting RACH transmission on an SBFD symbol, Physical Random Access Channel (PRACH) resources (e.g., PRACH transmission opportunities, or also referred to as RACH occasions (ROs)) in the time domain can be increased as compared with an existing method. By an increase in RO, reduction of latency in RACH transmission, reduction of collision between terminals, and improvement of coverage by Long preamble format or PRACH repetition (e.g., repetition transmission) can be achieved.

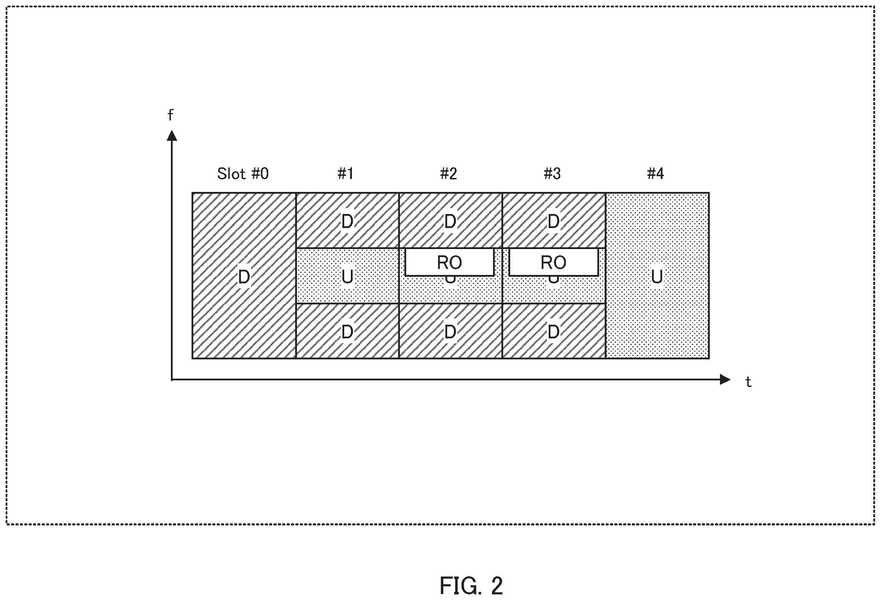

FIG. 2 illustrates an arrangement example of RACH resources (RO) on SBFD symbols. In the example of FIG. 2, slot #0 is a slot composed of DL symbols (e.g., referred to as "DL slot"), slots #1, #2, and #3 are slots composed of SBFD symbols (e.g., referred to as "SBFD slot"), and slot #4 is a slot composed of UL symbols (e.g., referred to as "UL slot"). Further, in the example of FIG. 2, the subband configuration in the SBFD slot is {DUD}. In the example of FIG. 2, PRACH resources (RO) are arranged in UL subbands of slot #2 and slot #3. In this manner, by supporting RACH transmission on SBFD symbols, PRACH resources in the time domain can be increased as compared with an existing method.

Meanwhile, in a case of supporting PRACH transmission on UL subbands, PRACH transmission on a UL subband may cause inter-terminal interference (e.g., inter-UE interference, or UL-to-UE CLI) with respect to DL reception on a DL subband, and may cause deterioration of DL performance.

For example, in Contention-based random access (CBRA), a terminal selects a resource and a preamble to be used, from among a plurality of candidates of PRACH resources and preambles configured in a cell, and transmits a PRACH signal. Further, a PRACH signal is transmitted when transmission is necessary at a terminal, and is not always transmitted. Therefore, a base station cannot specify in advance which terminal transmits PRACH by which PRACH resource, and thus control of inter-terminal interference by the base station is difficult. This is because the magnitude of inter-terminal interference can vary depending on the relationship between a terminal on an interference-giving side (e.g., Aggressor terminal) and a terminal on an interference-receiving side (e.g., Victim terminal). For example, when terminals are located close to each other, interference tends to be large. Therefore, when PRACH transmission in an SBFD symbol is supported, it is expected that a method for reducing inter-terminal interference will be studied.

In a non-limiting example of the present disclosure, a method for reducing inter-terminal interference in PRACH transmission in SBFD symbols will be described.

### [Overview of Communication System]

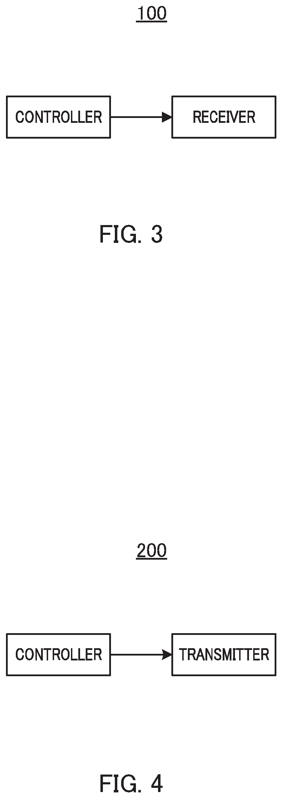

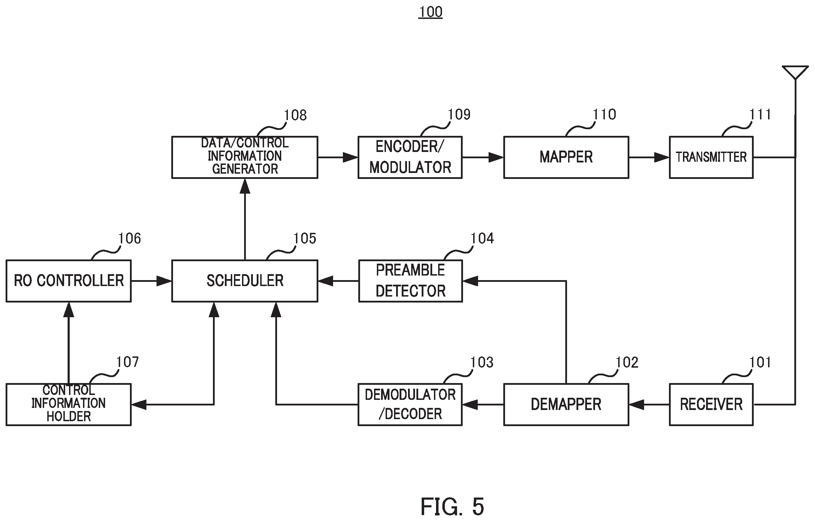

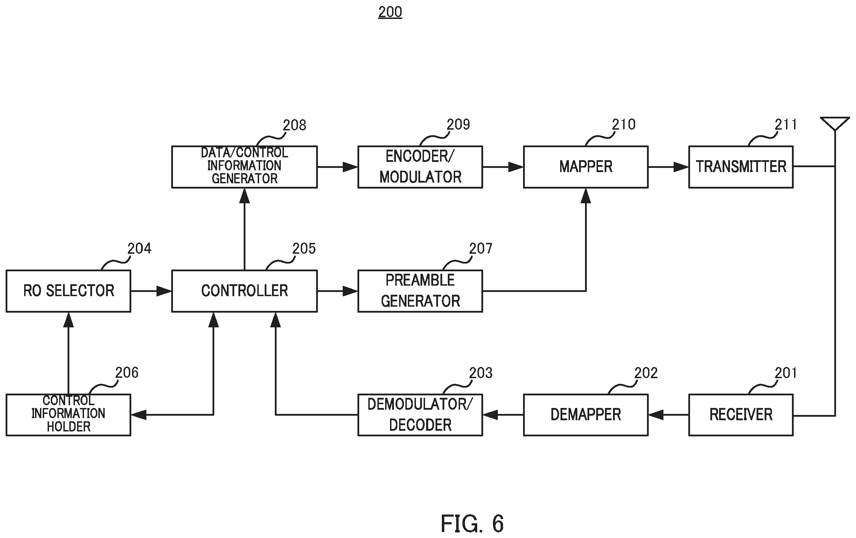

A communication system according to an embodiment of the present disclosure may include, for example, base station 100 (e.g., gNB) illustrated in FIGS. 3 and 5, and terminal 200 (e.g., UE) illustrated in FIGS. 4 and 6. Base station 100 and terminal 200 may each be present in a plurality in the communication system.

FIG. 3 is a block diagram illustrating a configuration example of a part of base station 100 according to an embodiment of the present disclosure. In base station 100 illustrated in FIG. 3, a controller (e.g., corresponding to control circuitry) configures transmission opportunities (e.g., ROs) of a random access channel, which are selected based on a threshold for received power of terminal 200, in a plurality of time resources including a time resource (e.g., SBFD symbol) in which a frequency band is divided into a plurality of bands. A receiver (e.g., corresponding to reception circuitry) receives a signal of a random access channel (PRACH) using the transmission opportunity.

FIG. 4 is a block diagram illustrating a configuration example of a part of terminal 200 according to an embodiment of the present disclosure. In terminal 200 illustrated in FIG. 4, a controller (e.g., corresponding to control circuitry) selects a transmission opportunity (e.g., RO) of a random access channel based on a threshold for received power, in a plurality of time resources including a time resource (e.g., SBFD symbol) in which a frequency band is divided into a plurality of bands. A transmitter (e.g., corresponding to transmission circuitry) transmits a signal of a random access channel (PRACH) using the transmission opportunity.

### [Configuration of Base Station]

FIG. 5 is a block diagram illustrating a configuration example of base station 100 according to an embodiment of the present disclosure. In FIG. 5, base station 100 includes receiver 101, demapper 102, demodulator/decoder 103, preamble detector 104, scheduler 105, RO controller 106, control information holder 107, data/control information generator 108, encoder/modulator 109, mapper 110, and transmitter 111.

Note that, for example, at least one of demapper 102, demodulator/decoder 103, scheduler 105, RO controller 106, control information holder 107, data/control information generator 108, encoder/modulator 109, and mapper 110 may be included in the controller illustrated in FIG. 3, and receiver 101 may be included in the receiver illustrated in FIG. 3.

Receiver 101 performs, for example, reception processing such as down-conversion or A/D conversion on a received signal received through an antenna, and outputs the received signal after the reception processing to demapper 102.

Demapper 102 performs resource demapping on the received signal (e.g., uplink signal) input from receiver 101, and outputs a modulated signal to demodulator/decoder 103 and preamble detector 104.

Demodulator/decoder 103 demodulates and decodes, for example, a modulated signal input from demapper 102, and outputs a decoding result to scheduler 105.

Preamble detector 104 performs, for example, detection of a preamble transmitted on a PRACH (e.g., PRACH signal) on the modulated signal input from demapper 102, and outputs a detection result to scheduler 105.

Scheduler 105 may perform, for example, scheduling for terminal 200. Scheduler 105 performs, for example, scheduling of transmission and reception of each terminal 200 based on at least one of the decoding result input from demodulator/decoder 103, the detection result of the preamble input from preamble detector 104, the information input from RO controller 106 (e.g., including PRACH configuration information), and the control information input from control information holder 107, and instructs data/control information generator 108 to generate at least one of data and control information. Further, scheduler 105 instructs data/control information generator 108 to transmit PRACH configuration information input from RO controller 106 to terminal 200 as signaling information. Further, scheduler 105 outputs control information related to terminal 200 to control information holder 107.

RO controller 106 determines, based on control information input from control information holder 107 (e.g., information related to SBFD), for example, PRACH resources on SBFD symbols (e.g., positions, number, and the like in the frequency domain and the time domain), PRACH resources on non-SBFD symbols (e.g., positions, number, and the like in the frequency domain and the time domain), and information used for selection of a PRACH resource (e.g., information related to threshold). RO controller 106 may determine PRACH configuration information (e.g., including PRACH transmission power) associated with PRACH resources (ROs). RO controller 106 outputs the determined PRACH configuration information to scheduler 105.

Control information holder 107 holds, for example, control information configured for each terminal 200. The control information may include, for example, information related to SBFD. Control information holder 107 may output, for example, the held information to each component (e.g., scheduler 105 and RO controller 106) of base station 100 as necessary.

Data/control information generator 108 generates, for example, at least one of data and control information in accordance with the instruction from scheduler 105, and outputs a signal including the generated data or control information to encoder/modulator 109. The generated data may include, for example, higher layer signaling information (e.g., PRACH configuration information).

Encoder/modulator 109 encodes and modulates, for example, a signal (e.g., data, control information) input from data/control information generator 108, and outputs a modulated signal to mapper 110.

Mapper 110 performs, for example, resource mapping on the modulated signal input from encoder/modulator 109, and outputs a transmission signal to transmitter 111.

Transmitter 111 performs, for example, transmission processing such as D/A conversion, up-conversion, or amplification on the signal input from mapper 110, and transmits a radio signal obtained by the transmission processing from an antenna to terminal 200.

### [Configuration of Terminal]

FIG. 6 is a block diagram illustrating a configuration example of terminal 200 according to one aspect of the present disclosure. In FIG. 6, terminal 200 includes receiver 201, demapper 202, demodulator/decoder 203, RO selector 204, controller 205, control information holder 206, preamble generator 207, data/control information generator 208, encoder/modulator 209, mapper 210, and transmitter 211.

For example, at least one of demapper 202, demodulator/decoder 203, RO selector 204, controller 205, control information holder 206, preamble generator 207, data/control information generator 208, encoder/modulator 209, and mapper 210 may be included in the controller illustrated in FIG. 4, and transmitter 211 may be included in the transmitter illustrated in FIG. 4.

Receiver 201 performs reception processing such as down-conversion or A/D conversion on a received signal received through an antenna, and outputs the received signal after the reception processing to demapper 202.

Demapper 202 performs resource demapping on the received signal input from receiver 201, and outputs a modulated signal to demodulator/decoder 203.

Demodulator/decoder 203 demodulates and decodes, for example, the modulated signal input from demapper 202, and outputs a decoding result to controller 205. The decoding result may include, for example, at least one of higher layer signaling information and downlink control information.

RO selector 204 selects a PRACH resource (RO) to be used, based on, for example, control information input from control information holder 206 (e.g., PRACH configuration information, information related to SBFD (e.g., including information related to slot configuration, information related to subband configuration, or information related to selection of PRACH resource)), and outputs information related to the selected PRACH resource (PRACH resource information) to controller 205.

Controller 205 may determine whether transmission and reception of data or control information is present, or whether PRACH transmission is present, based on, for example, a decoding result (e.g., data or control information) input from demodulator/decoder 203, PRACH resource information input from RO selector 204, and control information input from control information holder 206. When transmission of data or control information is present as a result of the determination, controller 205 may, for example, instruct data/control information generator 208 to generate at least one of data and control information. Further, when PRACH transmission is present, controller 205 may, for example, instruct preamble generator 207 to generate a preamble signal, based on the PRACH resource information. Further, controller 205 may, for example, output control information on terminal 200 to control information holder 206.

Control information holder 206 holds, for example, control information input from controller 205, and outputs the held information to each component (e.g., RO selector 204 and controller 205) as necessary.

Preamble generator 207 generates, for example, a preamble signal to be transmitted on PRACH (e.g., PRACH signal) in accordance with an instruction from controller 205, and outputs the generated preamble signal to mapper 210.

Data/control information generator 208 generates, for example, data or control information in accordance with the instruction from controller 205, and outputs a signal including the generated data or control information to encoder/modulator 209.

Encoder/modulator 209 encodes and modulates, for example, a signal input from data/control information generator 208, and outputs a modulated signal to mapper 210.

Mapper 210 performs resource mapping on the modulated signal input from encoder/modulator 209 or a preamble signal input from preamble generator 207, and outputs a transmission signal to transmitter 211.

Transmitter 211 performs, for example, transmission processing such as D/A conversion, up-conversion, or amplification on the signal input from mapper 210, and transmits a radio signal obtained by the transmission processing from an antenna to base station 100.

### [Operations of Base Station 100 and Terminal 200]

Exemplary operations of base station 100 and terminal 200 having the above configurations will be described.

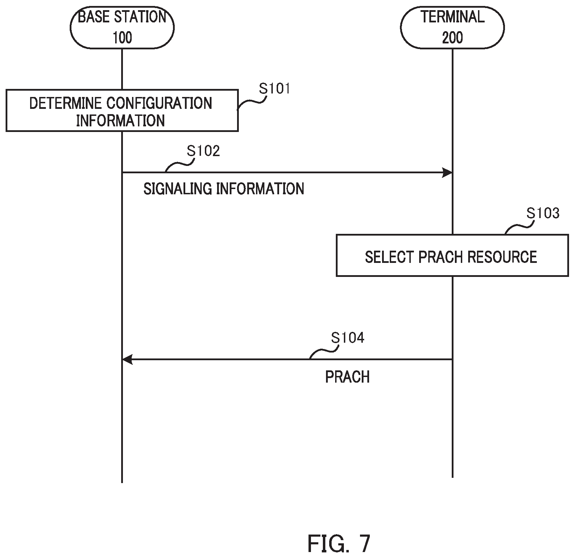

FIG. 7 is a sequence diagram illustrating exemplary operations of base station 100 and terminal 200.

In FIG. 7, base station 100 determines, for example, a configuration related to SBFD or PRACH (S101).

Base station 100 transmits, for example, higher-layer signaling information including the determined configuration information to terminal 200 (S102). Transmission of the signaling information may be, for example, broadcasting by System Information Block (SIB), or may be indicated by terminal-specific (terminal-individual) signaling information.

Terminal 200 selects, for example, a PRACH resource (RO) to be used for PRACH transmission from available PRACH resources, based on the configuration information included in the signaling information transmitted from base station 100 (S103).

Terminal 200 transmits a PRACH (e.g., preamble signal) based on the selected PRACH resource, and base station 100 receives the PRACH (S104).

### [PRACH resource selection method]

A method for selecting a PRACH resource (RO) in terminal 200 (e.g., RO selector 204) will be described. Note that base station 100 (e.g., RO controller 106) may, for example, configure PRACH resources available to terminal 200 on the assumption of the PRACH resource selection method performed by terminal 200.

Terminal 200 selects a PRACH resource (RO) to be used for PRACH transmission according to, for example, a threshold for received power of a signal in terminal 200 or a rule regarding a time resource (e.g., symbol). Note that the threshold and the rule may be configured for terminal 200 by base station 100, for example, or may be predefined.

In the following, exemplary methods for selecting a PRACH resource will be described.

### <Method 1>

In Method 1, terminal 200 selects an RO to be used for PRACH transmission, based on a comparison among a threshold for PRACH transmission in an RO on an SBFD symbol, a threshold for PRACH transmission in an RO on a non-SBFD symbol, and the received power of a signal.

The received power of a signal may be, for example, Synchronization Signal-Reference Signal Received Power (SS-RSRP). The SS-RSRP is also referred to as, for example, SS/physical broadcast channel (PBCH) block (SSB)-RSRP.

Further, the thresholds for received power (e.g., SS-RSRP) may include, for example, as described below, a threshold for determining whether PRACH transmission is possible (threshold for PRACH transmission), and a threshold for determining the number of transmissions (the number of repetitions) in PRACH repetition (repetition transmission) (threshold for repetitions).

For example, as the threshold for PRACH transmission and the threshold for the number of PRACH repetitions, thresholds corresponding to an SBFD symbol and a non-SBFD symbol, respectively (e.g., thresholds associated with the SBFD symbol and the non-SBFD symbol, respectively), may be configured.

Further, for example, as the threshold for the number of PRACH repetitions, a threshold corresponding to one or more repetition numbers may be configured.

In the following, an example of RO selection in terminal 200 based on SS-RSRP and each threshold (e.g., whether PRACH is transmitted and determination of the number of repetitions) will be described.

### (Threshold for PRACH transmission in SBFD symbol)

For example, when the SS-RSRP is equal to or greater than the threshold, terminal 200 may transmit PRACH in an RO on an SBFD symbol associated with the threshold. On the other hand, for example, when the SS-RSRP is less than the threshold, terminal 200 does not perform PRACH transmission in an RO on an SBFD symbol associated with the threshold.

The threshold for PRACH transmission in an SBFD symbol may be configured, for example, by the individual parameter associated with an RO of the SBFD symbol. For example, in configuring the threshold for PRACH transmission in an SBFD symbol, a higher-layer parameter associated with an RO of the SBFD symbol (e.g., rsrp-ThresholdSSB in RACH-ConfigCommon IE) may be reused. Note that the threshold for PRACH transmission in an SBFD symbol may be predefined in a standard, or may be indicated to terminal 200 by other information different from the higher-layer parameter.

### (Threshold for PRACH transmission in non-SBFD symbol)

For example, when the SS-RSRP is equal to or greater than the threshold, terminal 200 may transmit PRACH in an RO on a non-SBFD symbol associated with the threshold. On the other hand, for example, when the SS-RSRP is less than the threshold, terminal 200 does not perform PRACH transmission in an RO on a non-SBFD symbol associated with the threshold.

The threshold for PRACH transmission in a non-SBFD symbol may be configured, for example, by an individual parameter associated with an RO of the non-SBFD symbol. For example, in configuring the threshold for PRACH transmission in a non-SBFD symbol, a higher-layer parameter associated with an RO of the non-SBFD symbol (e.g., rsrp-ThresholdSSB in RACH-ConfigCommon IE) may be reused. Note that the threshold for PRACH transmission in a non-SBFD symbol may be predefined in a standard, or may be indicated to terminal 200 by other information different from the higher-layer parameter.

### (Threshold for Number of PRACH Repetitions in SBFD Symbol)

For example, when the SS-RSRP is less than the threshold, terminal 200 performs repetition transmission of PRACH for the number of times corresponding to the threshold in an RO on an SBFD symbol associated with the threshold.

Note that the threshold for the number of PRACH repetitions in an SBFD symbol may be used when RACH repetition is applied to terminal 200. Further, the threshold for the number of PRACH repetitions in an SBFD symbol may be configured for terminal 200 by a higher-layer parameter (configuration), may be predefined in a standard, or may be indicated to terminal 200 by other information different from the higher-layer parameter.

### (Threshold for Number of RACH Repetitions in non-SBFD Symbol)

For example, when the SS-RSRP is less than the threshold, terminal 200 performs repetition transmission of PRACH for the number of times corresponding to the threshold in an RO on a non-SBFD symbol associated with the threshold.

Note that the threshold for the number of PRACH repetitions in a non-SBFD symbol may be used when RACH repetition is applied to terminal 200. Further, the threshold for the number of PRACH repetitions in a non-SBFD symbol may be configured for terminal 200 by a higher-layer parameter (configuration), may be predefined in a standard, or may be indicated to terminal 200 by other information different from the higher-layer parameter.

Examples of the thresholds have been described above.

Next, an example of a procedure for selecting a PRACH resource (RO) and determining the number of PRACH repetitions in terminal 200 (e.g., SBFD-aware terminal) will be described. Note that, when PRACH repetition is not applied, terminal 200 may perform the following (Step 1) and need not perform the other steps.

### (Step 1)

Terminal 200 selects an RO of a symbol type corresponding to a threshold, among the "threshold for PRACH transmission in an SBFD symbol" and the "threshold for PRACH transmission in a non-SBFD symbol," for which the SS-RSRP is equal to or greater than the threshold and which is closer in value to the SS-RSRP (e.g., nearest to the SS-RSRP).

For example, terminal 200 may perform the following operations.

When the SS-RSRP is equal to or greater than the "threshold for PRACH transmission in an SBFD symbol" and is less than the "threshold for PRACH transmission in a non-SBFD symbol," terminal 200 selects an RO on an SBFD symbol.

When the SS-RSRP is equal to or greater than the "threshold for PRACH transmission in a non-SBFD symbol" and is less than the "threshold for PRACH transmission in an SBFD symbol," terminal 200 selects an RO on a non-SBFD symbol.

When the SS-RSRP is equal to or greater than the "threshold for PRACH transmission in an SBFD symbol" and is equal to or greater than the "threshold for PRACH transmission in a non-SBFD symbol," terminal 200 selects an RO of a symbol type associated with a threshold having a value closer to the SS-RSRP (e.g., a threshold having a higher configured value of the two thresholds).

When the SS-RSRP is less than the "threshold for PRACH transmission in an SBFD symbol" and is less than the "threshold for PRACH transmission in a non-SBFD symbol," terminal 200 does not transmit PRACH.

### (Step 2)

When a threshold for the number of PRACH repetitions is configured for the symbol type corresponding to the RO selected in Step 1, terminal 200 determines the number of PRACH repetitions based on a comparison between the SS-RSRP and the threshold for the number of PRACH repetitions. That is, in Method 1, when terminal 200 performs PRACH repetition transmission, terminal 200 selects a plurality of ROs in either one of the SBFD symbol and the non-SBFD symbol.

The example of the procedure for selecting a PRACH resource (RO) and determining the number of PRACH repetitions in terminal 200 has been described above.

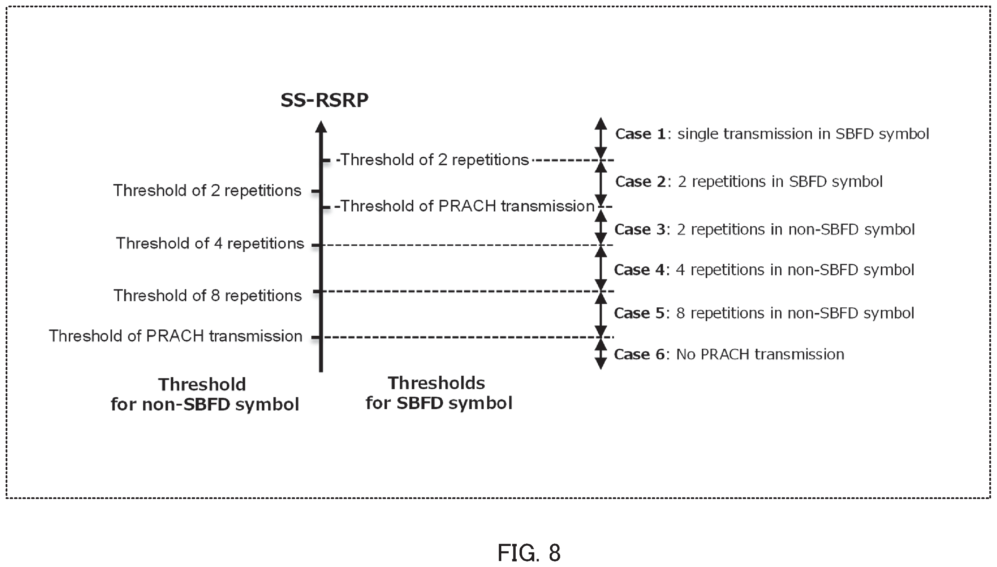

FIG. 8 illustrates an example of a relationship between the SS-RSRP and thresholds in Method 1.

In the example of FIG. 8, on the left side of an arrow (vertical axis) indicating a value of the SS-RSRP, a "threshold for PRACH transmission in a non-SBFD symbol" and a "threshold for the number of PRACH repetitions in a non-SBFD symbol" are shown, and on the right side, a "threshold for PRACH transmission in an SBFD symbol" and a "threshold for the number of PRACH repetitions in an SBFD symbol" are shown.

In the example of FIG. 8, thresholds for PRACH repetitions of 2, 4, and 8 times (three thresholds) are configured for the non-SBFD symbol, and a threshold for PRACH repetitions of 2 times (one threshold) is configured for the SBFD symbol. As illustrated in FIG. 8, according to the value of the SS-RSRP, the operation of PRACH transmission in terminal 200 is classified into the following six cases.

### (Case 1)

Case 1 is a case where the SS-RSRP is equal to or greater than both the "threshold for PRACH transmission in an SBFD symbol" and the "threshold for PRACH transmission in a non-SBFD symbol," and the SS-RSRP is equal to or greater than the "threshold for 2 PRACH repetitions in the SBFD symbol."

In Case 1, of the two thresholds for PRACH transmission, the threshold closer to the SS-RSRP is the "threshold for PRACH transmission in an SBFD symbol," and thus terminal 200 selects an RO on an SBFD symbol and performs PRACH transmission in the RO on the SBFD symbol. Further, in Case 1, since the SS-RSRP is equal to or greater than the threshold for 2 PRACH repetitions in an SBFD symbol, terminal 200 performs PRACH transmission without PRACH repetition (i.e., a single PRACH transmission) in the RO on the SBFD symbol.

### (Case 2)

Case 2 is a case where the SS-RSRP is equal to or greater than both the "threshold for PRACH transmission in an SBFD symbol" and the "threshold for PRACH transmission in a non-SBFD symbol," and the SS-RSRP is less than the "threshold for 2 PRACH repetitions in an SBFD symbol."

In Case 2, of the two thresholds for PRACH transmission, the threshold closer to the SS-RSRP is the "threshold for PRACH transmission in an SBFD symbol," and thus terminal 200 selects an RO on an SBFD symbol and performs PRACH transmission in the RO on the SBFD symbol. Further, in Case 2, since the SS-RSRP is less than the threshold for 2 PRACH repetitions in an SBFD symbol, terminal 200 performs PRACH repetition transmission twice in the RO on the SBFD symbol.

### (Case 3)

Case 3 is a case where the SS-RSRP is less than the "threshold for PRACH transmission in an SBFD symbol" and is equal to or greater than the "threshold for PRACH transmission in a non-SBFD symbol," and the SS-RSRP is less than the "threshold for 2 PRACH repetitions in a non-SBFD symbol" and is equal to or greater than the "threshold for 4 PRACH repetitions in a non-SBFD symbol."

In Case 3, terminal 200 selects an RO on a non-SBFD symbol and performs PRACH transmission in the RO on the non-SBFD symbol. Further, in Case 3, since the SS-RSRP is less than the threshold for 2 PRACH repetitions in a non-SBFD symbol and is equal to or greater than the threshold for 4 PRACH repetitions in a non-SBFD symbol, terminal 200 performs PRACH repetition transmission twice in the RO on the non-SBFD symbol.

### (Case 4)

Case 4 is a case where the SS-RSRP is less than the "threshold for PRACH transmission in an SBFD symbol" and is equal to or greater than the "threshold for PRACH transmission in a non-SBFD symbol," and the SS-RSRP is less than the "threshold for 4 PRACH repetitions in a non-SBFD symbol" and is equal to or greater than the "threshold for 8 PRACH repetitions in a non-SBFD symbol."

In Case 4, terminal 200 selects an RO on a non-SBFD symbol and performs PRACH transmission in the RO on the non-SBFD symbol. Further, in Case 4, since the SS-RSRP is less than the threshold for 4 PRACH repetitions in a non-SBFD symbol and is equal to or greater than the threshold for 8 PRACH repetitions in a non-SBFD symbol, terminal 200 performs PRACH repetition transmission four times in the RO on the non-SBFD symbol.

### (Case 5)

Case 5 is a case where the SS-RSRP is less than the "threshold for PRACH transmission in an SBFD symbol" and is equal to or greater than the "threshold for PRACH transmission in a non-SBFD symbol," and the SS-RSRP is less than the "threshold for 8 PRACH repetitions in a non-SBFD symbol."

In Case 5, terminal 200 selects an RO on a non-SBFD symbol and performs PRACH transmission in the RO on the non-SBFD symbol. Further, in Case 5, since the SS-RSRP is less than the threshold for 8 PRACH repetitions in a non-SBFD symbol, terminal 200 performs PRACH repetition transmission eight times in the RO on the non-SBFD symbol.

### (Case 6)

Case 6 is a case where the SS-RSRP is less than the "threshold for PRACH transmission in an SBFD symbol" and is less than the "threshold for PRACH transmission in a non-SBFD symbol." In Case 6, terminal 200 does not perform PRACH transmission.

The example of the relationship between the SS-RSRP and thresholds in Method 1 has been described above.

In this manner, by using the thresholds configured for SBFD symbols and non-SBFD symbols, terminal 200 can determine which PRACH resource (RO) of an SBFD symbol or a non-SBFD symbol is to be used for transmission, and can also determine the number of repetition transmissions.

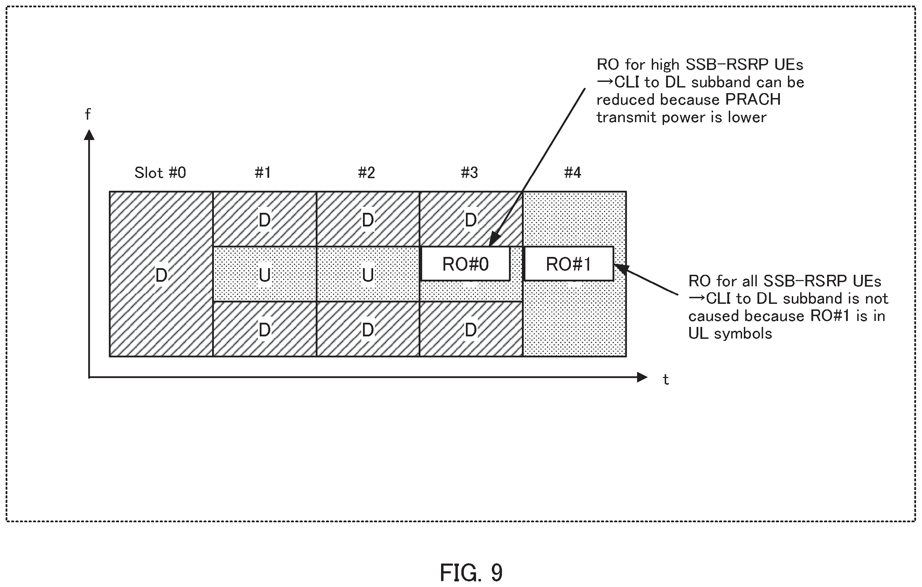

FIG. 9 illustrates an arrangement example of ROs based on Method 1. Note that, in FIG. 9, PRACH repetition is not described for the sake of simplicity of description.

In the example of FIG. 9, an RO (RO #0) on an SBFD symbol is configured in Slot #3, and an RO (RO #1) on a non-SBFD symbol (UL symbol) is configured in Slot #4.

Here, a case will be described where, for example, as in the example of FIG. 8, the "threshold for PRACH transmission in an SBFD symbol" is configured to be higher than the "threshold for PRACH transmission in a non-SBFD symbol."

In this case, in an SBFD-aware terminal, terminal 200 with a high SS-RSRP (e.g., when the SS-RSRP is equal to or greater than the "threshold for PRACH transmission in an SBFD symbol") selects RO #0 (SBFD symbol) and transmits PRACH in RO #0. Further, terminal 200 with a low SS-RSRP (e.g., when the SS-RSRP is less than the "threshold for PRACH transmission in an SBFD symbol" and is equal to or greater than the "threshold for PRACH transmission in a non-SBFD symbol") selects RO #1 (non-SBFD symbol) and transmits PRACH in RO #1.

For example, the higher the SS-RSRP is, the lower the UL transmission power at terminal 200 may be. Thus, even when PRACH transmission (UL transmission) is performed on an SBFD symbol, the impact on other subbands (e.g., DL subband) on the SBFD symbol is small, and therefore the inter-terminal interference can be kept low.

On the other hand, the lower the SS-RSRP is, the higher the UL transmission power at terminal 200 is expected to be. Therefore, when the SS-RSRP is low (e.g., when the SS-RSRP is less than the "threshold for PRACH transmission in an SBFD symbol" and is equal to or greater than the "threshold for PRACH transmission in a non-SBFD symbol"), by performing PRACH transmission (UL transmission) on a non-SBFD symbol (UL symbol), occurrence of inter-terminal interference on an SBFD symbol can be avoided.

In this manner, by configuring the "threshold for PRACH transmission in an SBFD symbol" to be higher than the "threshold for PRACH transmission in a non-SBFD symbol," inter-terminal interference in PRACH transmission on an SBFD symbol can be reduced.

Further, since UL transmission on an SBFD symbol may cause deterioration of DL performance due to inter-terminal interference, the UL transmission power may differ between an SBFD symbol and a non-SBFD symbol. Therefore, in an SBFD symbol and a non-SBFD symbol, thresholds for the number of PRACH repetitions may be associated with different repetition numbers. For example, even when the thresholds for PRACH repetition corresponding to an SBFD symbol and a non-SBFD symbol are set to the same SS-RSRP value, different repetition numbers may be associated between the SBFD symbol and the non-SBFD symbol. For example, when the transmission power on an SBFD symbol is lower than the transmission power on a non-SBFD symbol, an SS-RSRP threshold may be configured such that the repetition number on an SBFD symbol is greater than the repetition number on a non-SBFD symbol. This makes it possible to compensate, by the repetition number, for the low transmission power on an SBFD symbol. Further, for example, by configuring an SS-RSRP threshold such that the repetition number on an SBFD symbol is smaller than the repetition number on a non-SBFD symbol, the number of PRACH transmissions on an SBFD symbol can be reduced, and occurrence of inter-terminal interference in an SBFD symbol can be reduced.

As described above, according to Method 1, by individually configuring the threshold for PRACH transmission and a threshold for the number of PRACH repetitions for an SBFD symbol and a non-SBFD symbol, terminal 200 selects which of an RO on an SBFD symbol and an RO on a non-SBFD symbol is to be used to perform PRACH transmission and PRACH repetition transmission. This makes it possible to reduce inter-terminal interference on an SBFD symbol and to improve DL reception performance in an SBFD symbol.

### <Method 2>

In Method 2, as in Method 1, terminal 200 selects an RO to be used for PRACH transmission, based on a comparison between a threshold for PRACH transmission in an RO on an SBFD symbol and a threshold for PRACH transmission in an RO on a non-SBFD symbol, and received power of a signal (e.g., SS-RSRP).

Further, in Method 2, in PRACH repetition, terminal 200 selects both ROs, instead of selecting either an RO of an SBFD symbol or an RO of a non-SBFD symbol as in Method 1. For example, when performing PRACH repetition transmission, terminal 200 may perform PRACH transmission using ROs available in both symbol types without limiting the symbol type. For example, in order to determine the number of PRACH repetitions, terminal 200 may align (or share) a "threshold for PRACH repetition" between an SBFD symbol and a non-SBFD symbol, or may use a "threshold for PRACH repetition" configured for either one of the SBFD symbol and the non-SBFD symbol.

Hereinafter, an example of a procedure for selecting a PRACH resource (RO) and determining the number of PRACH repetitions in terminal 200 (e.g., SBFD-aware terminal) will be described.

In Method 2, terminal 200 may operate (make a determination) by replacing (Step 2) in Method 1 with the following (Step 2'). Note that, when terminal 200 does not satisfy the condition of (Step 2') (e.g., when a threshold is not satisfied), terminal 200 may perform the operation of (Step 2).

### (Step 2')

When, in Step 1, the SS-RSRP is equal to or greater than the threshold in both the "threshold for PRACH transmission in an SBFD symbol" and the "threshold for PRACH transmission in a non-SBFD symbol," and a threshold for the number of PRACH repetitions is configured, terminal 200 determines the number of PRACH repetitions based on a comparison between the SS-RSRP and the threshold for the number of PRACH repetitions.

At this time, the threshold for the number of PRACH repetitions may be configured in common for an SBFD symbol and a non-SBFD symbol, or a threshold configured for either one of the SBFD symbol and the non-SBFD symbol may be applied. Further, when the number of PRACH repetitions is a plurality of times, terminal 200 may perform PRACH repetition transmission using both an RO on an SBFD symbol and an RO on a non-SBFD symbol.

The example of the procedure for selecting a PRACH resource (RO) and determining the number of PRACH repetitions in terminal 200 has been described above.

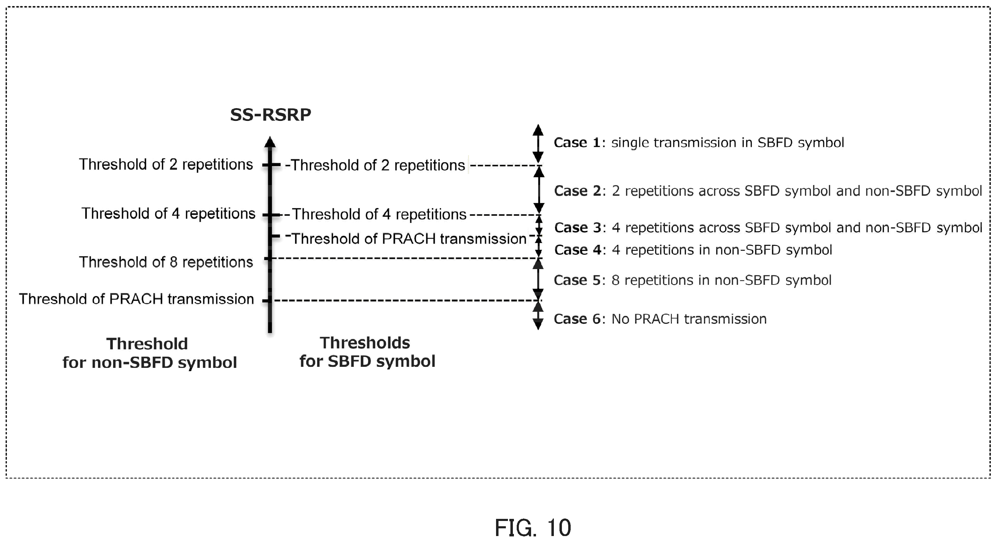

FIG. 10 illustrates an example of a relationship between the SS-RSRP and thresholds in Method 2.

In the example of FIG. 10, on the left side of an arrow (vertical axis) indicating a value of the SS-RSRP, a "threshold for PRACH transmission in a non-SBFD symbol" and a "threshold for the number of PRACH repetitions in a non-SBFD symbol" are shown, and on the right side, a "threshold for PRACH transmission in an SBFD symbol" and a "threshold for the number of PRACH repetitions in an SBFD symbol" are shown.

In the example of FIG. 10, thresholds for PRACH repetitions of 2, 4, and 8 times (three thresholds) are configured for the non-SBFD symbol, and thresholds for PRACH repetitions of 2 and 4 times (two thresholds) are configured for the SBFD symbol. As illustrated in FIG. 10, the thresholds for 2 PRACH repetitions and 4 PRACH repetitions are set to the same value for both the non-SBFD symbol and the SBFD symbol.

As illustrated in FIG. 10, according to the value of the SS-RSRP, the operation of PRACH transmission in terminal 200 is classified into the following six cases.

### (Case 1)

Case 1 is a case where the SS-RSRP is equal to or greater than both the "threshold for PRACH transmission in an SBFD symbol" and the "threshold for PRACH transmission in a non-SBFD symbol," and the SS-RSRP is equal to or greater than the "threshold for 2 PRACH repetitions in the SBFD symbol."

In Case 1, of the two thresholds for PRACH transmission, the threshold closer to the SS-RSRP is the "threshold for PRACH transmission in an SBFD symbol," and thus terminal 200 selects an RO on an SBFD symbol and performs PRACH transmission in the RO on the SBFD symbol. Further, in Case 1, since the SS-RSRP is equal to or greater than the threshold for 2 PRACH repetitions, terminal 200 performs PRACH transmission without PRACH repetition (i.e., single PRACH transmission) in the RO on the SBFD symbol.

### (Case 2)

Case 2 is a case where the SS-RSRP is equal to or greater than both the "threshold for PRACH transmission in an SBFD symbol" and the "threshold for PRACH transmission in a non-SBFD symbol," and the SS-RSRP is less than the "threshold for 2 PRACH repetitions" and is equal to or greater than the "threshold for 4 PRACH repetitions." In Case 2, terminal 200 selects an RO on an SBFD symbol and an RO on a non-SBFD symbol, and performs PRACH repetition transmission twice in the RO on the SBFD symbol and the RO on the non-SBFD symbol.

### (Case 3)

Case 3 is a case where the SS-RSRP is equal to or greater than both the "threshold for PRACH transmission in an SBFD symbol" and the "threshold for PRACH transmission in a non-SBFD symbol," and the SS-RSRP is less than the "threshold for 4 PRACH repetitions" and is equal to or greater than the "threshold for 8 PRACH repetitions." In Case 3, terminal 200 selects an RO on an SBFD symbol and an RO on a non-SBFD symbol, and performs PRACH repetition transmission four times in the RO on the SBFD symbol and the RO on the non-SBFD symbol.

### (Case 4)

Case 4 is a case where the SS-RSRP is less than the "threshold for PRACH transmission in an SBFD symbol" and is equal to or greater than the "threshold for PRACH transmission in a non-SBFD symbol," and the SS-RSRP is less than the "threshold for 4 PRACH repetitions" and is equal to or greater than the "threshold for 8 PRACH repetitions." In Case 4, terminal 200 selects an RO on a non-SBFD symbol and performs PRACH repetition transmission four times in the RO on the non-SBFD symbol.

### (Case 5)

Case 5 is a case where the SS-RSRP is less than the "threshold for PRACH transmission in an SBFD symbol" and is equal to or greater than the "threshold for PRACH transmission in a non-SBFD symbol," and the SS-RSRP is less than the "threshold for 8 PRACH repetitions." In Case 5, terminal 200 selects an RO on a non-SBFD symbol and performs PRACH repetition transmission eight times in the RO on the non-SBFD symbol.

### (Case 6)

Case 6 is a case where the SS-RSRP is less than the "threshold for PRACH transmission in an SBFD symbol" and is less than the "threshold for PRACH transmission in a non-SBFD symbol." In Case 6, terminal 200 does not perform PRACH transmission.

The example of the relationship between the SS-RSRP and thresholds in Method 2 has been described above.

As described above, according to Method 2, by configuring a threshold for PRACH transmission and a threshold for the number of PRACH repetitions such that PRACH transmission can be performed using both an RO of an SBFD symbol and an RO of a non-SBFD symbol, terminal 200 becomes capable of selecting both the RO on the SBFD symbol and the RO on the non-SBFD symbol. This makes it possible to reduce inter-terminal interference on an SBFD symbol and to improve DL reception performance in an SBFD symbol. Further, in Method 2, since both resources of the RO of the SBFD symbol and the RO of the non-SBFD symbol can be used for PRACH transmission (e.g., repetition transmission), the PRACH transmission latency can be reduced.

Note that Method 2 may also be applied when allocating the resources of one RO across an SBFD symbol and a non-SBFD symbol is allowed. In this case, for example, in the above-described (Case 1), terminal 200 selects an RO of the SBFD symbol and performs one PRACH transmission, but when an RO across an SBFD symbol and a non-SBFD symbol is available, terminal 200 may perform PRACH transmission using the RO across the SBFD symbol and the non-SBFD symbol.

### <Method 3>

In Method 3, terminal 200 selects an RO to be used for PRACH transmission, based on a comparison between a threshold for PRACH transmission in an RO on an SBFD symbol and a threshold for PRACH transmission in an RO on a non-SBFD symbol, and received power of a signal (e.g., SS-RSRP), and also based on a rule related to priority between an SBFD symbol and a non-SBFD symbol.

Note that, as thresholds for PRACH transmission in an RO of each of an SBFD symbol and a non-SBFD symbol (e.g., threshold for PRACH transmission and threshold for the number of PRACH repetitions), the same thresholds as those in Method 1 may be used.

Terminal 200 (e.g., SBFD-aware terminal) selects an RO in accordance with the following procedure. Note that, when PRACH repetition is not applied, terminal 200 may perform the following steps (Step 1) and (Step 2) and need not perform the other steps.

### (Step 1)

Terminal 200 determines, in accordance with the priority rule, which of an RO on a non-SBFD symbol and an RO on an SBFD symbol is to be used. That is, terminal 200 determines, in accordance with the priority rule, a symbol type on which PRACH transmission is to be performed.

### (Step 2)

Based on the symbol type determined in Step 1, terminal 200 selects an RO available for PRACH transmission, based on either the "threshold for PRACH transmission in an SBFD symbol" or the "threshold for PRACH transmission in a non-SBFD symbol," and the SS-RSRP.

For example, when the SS-RSRP is equal to or greater than the threshold for PRACH transmission corresponding to the symbol type determined in Step 1, terminal 200 selects an RO on a symbol of the symbol type determined in Step 1.

Further, for example, when the SS-RSRP is not equal to or greater than the threshold for PRACH transmission corresponding to the symbol type determined in Step 1 (is less than the threshold), and is equal to or greater than the threshold for PRACH transmission corresponding to the symbol type not selected in Step 1, terminal 200 may apply any of the following methods.

A first method is a method in which the symbol type is not changed ("without symbol-type change"). In this case, terminal 200 does not perform PRACH transmission. This makes it possible to prohibit transmission in a non-prioritized symbol type by the priority rule, thereby simplifying the determination in terminal 200. Further, for example, when transmission on an SBFD symbol is prohibited, inter-terminal interference can be reduced.

A second method is a method in which the symbol type is changed ("with symbol-type change"). In this case, terminal 200 selects an RO on a symbol of the symbol type not selected (not prioritized) in Step 1. This makes it possible to improve PRACH transmission opportunities.

Further, for example, when the SS-RSRP is less than both the "threshold for PRACH transmission in an SBFD symbol" and the "threshold for PRACH transmission in a non-SBFD symbol," terminal 200 does not perform PRACH transmission.

### (Step 3)

When a threshold for the number of PRACH repetitions is configured for the symbol type selected in Step 1 and Step 2, terminal 200 determines the number of PRACH repetitions based on a comparison between the SS-RSRP and the threshold for the number of PRACH repetitions.

The example of the procedure for selecting a PRACH resource (RO) and determining the number of PRACH repetitions in terminal 200 has been described above.

Next, exemplary priority rules will be described.

As priority rules, for example, the following rules may be applied. The priority rules may be predefined in advance, or may be indicated to terminal 200 by configuration. For example, the configuration of the priority rules may include the configuration of the type of rule to be applied and the configuration of enabling or disabling the rule.

### (Rule Example 1)

In Example 1, an RO on an SBFD symbol is preferentially selected as much as possible. For example, for PRACH transmission for requesting high-priority UL data transmission, in addition to an SBFD symbol, an RO on a non-SBFD symbol is also available, but for low-priority UL data, an RO on an SBFD symbol may be made available and an RO on a non-SBFD symbol need not be used.

By terminal 200 (e.g., SBFD-aware terminal) using an RO on an SBFD symbol in preference to an RO on a non-SBFD symbol, the probability that a non-SBFD-aware terminal can use an RO on a non-SBFD symbol increases, and thus, for example, a collision probability of PRACH transmission can be reduced and fairness in RO usage between SBFD-aware terminals and non-SBFD-aware terminals can be improved.

### (Rule Example 2)

In Example 2, when power ramping is not applied, an RO on an SBFD symbol is preferentially selected over an RO on a non-SBFD symbol, and when power ramping is applied, an RO on a non-SBFD symbol is preferentially selected over an RO on an SBFD symbol.

When power ramping is applied, PRACH transmission power increases and inter-terminal interference increases. In this case, terminal 200 can suppress an increase in inter-terminal interference by preferentially selecting a non-SBFD symbol. When power ramping is not applied, as in Rule Example 1, fairness in RO usage between SBFD-aware terminals and non-SBFD-aware terminals can be improved.

### (Rule Example 3)

In Example 3, when PRACH transmission power is less than a threshold, an RO on an SBFD symbol is preferentially selected over an RO on a non-SBFD symbol, and when PRACH transmission power is equal to or greater than the threshold, an RO on a non-SBFD symbol is preferentially selected over an RO on an SBFD symbol.

The threshold for PRACH transmission power may be predefined, for example, or may be indicated to terminal 200 by a configuration.

When PRACH transmission power increases (e.g., when it is equal to or greater than the threshold), inter-terminal interference increases, and thus terminal 200 can suppress an increase in inter-terminal interference by selecting a non-SBFD symbol. When PRACH transmission power does not increase (e.g., when it is less than the threshold), as in Rule Example 1, fairness in RO usage between SBFD-aware terminals and non-SBFD-aware terminals can be improved.

### (Rule Example 4)

In Example 4, a symbol type to be prioritized (or used) is configured using semi-static configuration (e.g., indication using SIB) or dynamic indication (e.g., indication on UE-specific PDCCH or group-common PDCCH). For example, the prioritized symbol type may be indicated by a 1-bit flag.

For example, configuration and indication of the prioritized symbol type may differ for each terminal 200. For example, for a cell-edge terminal that tends to have a low SS-RSRP, by configuring the use of an RO on a non-SBFD symbol, inter-terminal interference in an SBFD symbol can be reduced.

In Example 4, for example, it becomes possible to configure which symbol type is to be selected depending on terminals 200 served by base station 100 and/or traffic conditions. For example, it becomes possible to configure a symbol type in consideration of whether an increase in inter-terminal interference in DL reception in an SBFD symbol is allowable. This makes it possible to improve flexibility of RO selection.

The examples of the priority rules have been described above.

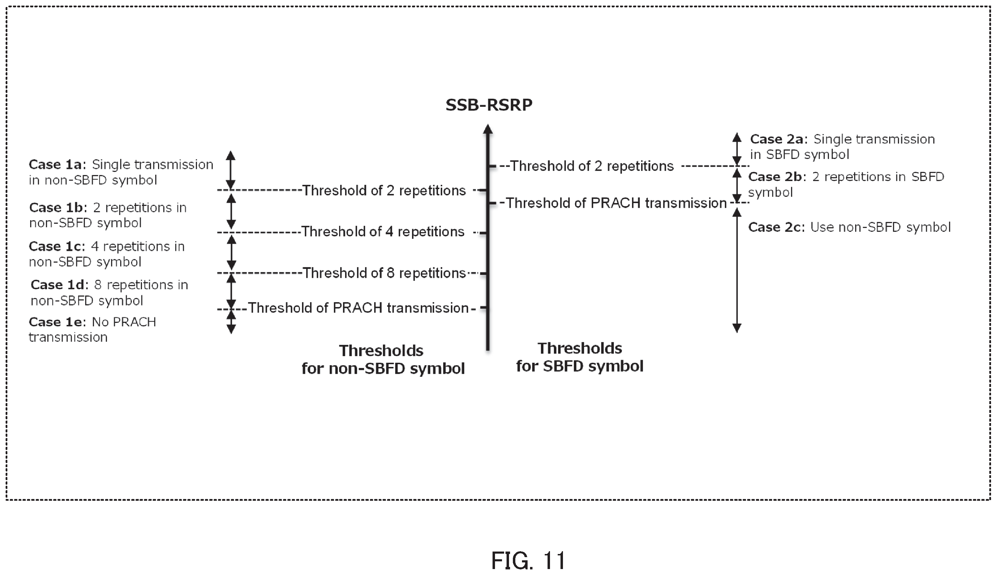

FIG. 11 illustrates an example of a relationship between the SS-RSRP and thresholds in Method 3.

In the example of FIG. 11, on the left side of an arrow (vertical axis) indicating a value of the SS-RSRP, a "threshold for PRACH transmission in a non-SBFD symbol" and a "threshold for the number of PRACH repetitions in a non-SBFD symbol" are shown, and on the right side, a "threshold for PRACH transmission in an SBFD symbol" and a "threshold for the number of PRACH repetitions in an SBFD symbol" are shown.

In the example of FIG. 11, as in Method 1 (FIG. 8), thresholds for PRACH repetitions of 2, 4, and 8 times (three thresholds) are configured for the non-SBFD symbol, and a threshold for PRACH repetitions of 2 times (one threshold) is configured for the SBFD symbol. As illustrated in FIG. 11, the threshold configuration is the same as that in FIG. 8, but since the RO selection method differs between Method 3 and Method 1, the operation of PRACH transmission in terminal 200 is classified into the following eight cases according to the value of the SS-RSRP.

Note that, in the example of FIG. 11, a condition with symbol-type change (second method) in the above-described (Step 2) is assumed.

In FIG. 11, Cases 1a to 1e indicate cases in which a non-SBFD symbol is selected in Step 1. When a non-SBFD symbol is selected in Step 1, terminal 200 selects PRACH resources (e.g., whether PRACH transmission is performed and the number of PRACH repetitions) corresponding to any of the cases classified into Cases 1a to 1e, based on a comparison between the SS-RSRP and the "threshold for PRACH transmission in a non-SBFD symbol" and the "threshold for the number of PRACH repetitions in a non-SBFD symbol."

In FIG. 11, Cases 2a to 2c indicate cases in which an SBFD symbol is selected in Step 1.

Case 2a is a case where the SS-RSRP is equal to or greater than the "threshold for PRACH transmission in an SBFD symbol" and is equal to or greater than the "threshold for 2 PRACH repetitions." In Case 2a, terminal 200 selects an RO on an SBFD symbol and performs PRACH transmission without PRACH repetition in the RO on the SBFD symbol.

Case 2b is a case where the SS-RSRP is equal to or greater than the "threshold for PRACH transmission in an SBFD symbol" and is less than the "threshold for 2 PRACH repetitions." In Case 2b, terminal 200 selects an RO on an SBFD symbol and performs PRACH repetition transmission twice in the RO on the SBFD symbol.

Case 2c is a case where the SS-RSRP is less than the "threshold for PRACH transmission in an SBFD symbol." In the example of FIG. 11, since symbol-type change in Step 2 is assumed, in Case 2c, terminal 200 changes the symbol type to be used to a non-SBFD symbol. Then, based on the SS-RSRP, terminal 200 performs any of the PRACH transmission operations of Cases 1b to 1e. Note that, in the example of FIG. 11, since the "threshold for 2 PRACH repetitions in a non-SBFD symbol" is higher than the "threshold for PRACH transmission in an SBFD symbol," Case 1a cannot be selected.

The example of the relationship between the SS-RSRP and thresholds in Method 3 has been described above.

In this manner, according to Method 3, after configuring a priority rule of symbol types, a threshold for PRACH transmission and a threshold for the number of PRACH repetitions are individually configured for an SBFD symbol and a non-SBFD symbol. This enables terminal 200 to select whether to perform PRACH transmission and PRACH repetition transmission using an RO on an SBFD symbol or an RO on a non-SBFD symbol. This makes it possible to reduce inter-terminal interference on an SBFD symbol and to improve DL reception performance in an SBFD symbol.

Further, in Method 3, by using the priority rule, it becomes possible to select a PRACH resource based on finer selection criteria or selection criteria according to a situation, as compared with a case where selection (determination) of a PRACH resource is performed using only thresholds, and thus flexibility of RO selection can be improved.

### <Method 4>

In Method 4, as in Method 3, terminal 200 selects an RO to be used for PRACH transmission, based on a comparison between a threshold for PRACH transmission in an RO on an SBFD symbol and a threshold for PRACH transmission in an RO on a non-SBFD symbol, and received power of a signal (e.g., SS-RSRP), and also based on a rule related to priority between an SBFD symbol and a non-SBFD symbol.

In Method 4, a method will be described for selecting, in a case where PRACH transmission fails (e.g., in a case where there is no response (e.g., Msg 2) to the PRACH transmission), an RO to be used when terminal 200 retransmits PRACH after the failure of PRACH transmission (e.g., a method for selecting a transmission method to be used, based on a received power value (SS-RSRP) lower than that in the previous transmission).

For example, in a symbol type currently selected by terminal 200, when the SS-RSRP is equal to or greater than a threshold, terminal 200 may select, for a threshold closer (e.g., nearest) to the SS-RSRP, a transmission method for a case where the SS-RSRP is less than the threshold. That is, when PRACH transmission fails, terminal 200 selects an RO to be used for PRACH retransmission, based on a comparison between an SS-RSRP value (power value) lower than the SS-RSRP value having been used for selecting an RO in the PRACH transmission, and thresholds for PRACH transmission (e.g., threshold for PRACH transmission and threshold for the number of PRACH repetitions).

As an example, when terminal 200 performs PRACH transmission again after failing 2 repetition transmissions in a certain symbol type (e.g., when the SS-RSRP is less than a threshold for 2 repetition transmissions), terminal 200 may assume that the SS-RSRP is less than a lower threshold (e.g., threshold for 4 repetition transmissions), and may perform PRACH transmission with the repetition number set to four.

This operation corresponds, for example, to changing from the currently corresponding Case to a Case one level lower in Cases (Cases 1a to 1e or Cases 2a to 2c) of a certain symbol type illustrated in FIG. 11. Further, in FIG. 11, since a case with symbol-type change in Step 2 is assumed, terminal 200 may, as a next transmission method, change the symbol type in a case where, due to the Case change (change of transmission method), the SS-RSRP becomes less than the threshold of PRACH transmission in the selected symbol type.

In the following description, a transmission method is also referred to as a "level."

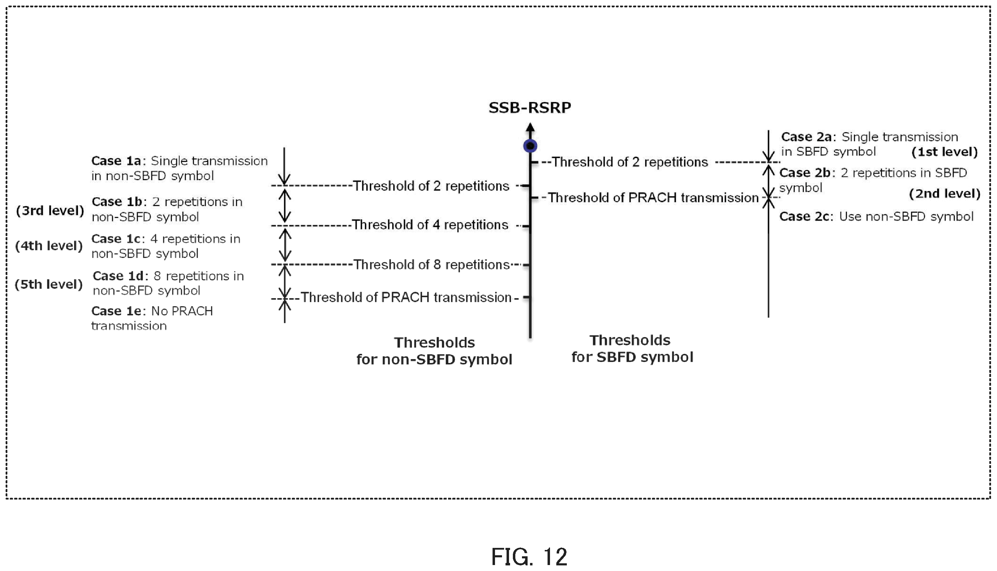

FIG. 12 illustrates an example of changing the transmission method when PRACH transmission fails.

In the example of FIG. 12, on the left side of an arrow (vertical axis) indicating a value of the SS-RSRP, a "threshold for PRACH transmission in a non-SBFD symbol" and a "threshold for the number of PRACH repetitions in a non-SBFD symbol" are shown, and on the right side, a "threshold for PRACH transmission in an SBFD symbol" and a "threshold for the number of PRACH repetitions in an SBFD symbol" are shown.

In the example of FIG. 12, as in Method 3 (FIG. 11), thresholds for PRACH repetitions of 2, 4, and 8 times (three thresholds) are configured for the non-SBFD symbol, and a threshold for PRACH repetitions of 2 times (one threshold) is configured for the SBFD symbol.

Note that, in the example of FIG. 12, as a priority rule of symbol types, Rule Example 1 described in Method 3 is assumed. Further, in the example of FIG. 12, a condition with symbol-type change (second method) in (Step 2) described in Method 3 is assumed.

Further, in the example of FIG. 12, the SS-RSRP measured by terminal 200 is indicated at a position of a circle mark on the vertical axis. In this case, terminal 200 may, for example, perform PRACH transmission in the following order of levels depending on a failure of PRACH transmission.

### (Level 1)

Terminal 200 selects an SBFD symbol as a symbol type in accordance with the priority rule, and selects a transmission method of Case 2a (e.g., single PRACH transmission in an RO on an SBFD symbol) based on a comparison between the SS-RSRP and thresholds. As illustrated in FIG. 12, Level 1 (Case 2a) is a transmission method in which the SS-RSRP is equal to or greater than the "threshold for 2 PRACH repetitions in an SBFD symbol."

### (Level 2)

When PRACH transmission at Level 1 fails, terminal 200 changes to a transmission method (Level 2) for a case where the SS-RSRP is less than the "threshold for 2 PRACH repetitions in an SBFD symbol," which is a threshold that is closer (e.g., nearest) to the SS-RSRP and that the SS-RSRP exceeds at Level 1. That is, terminal 200 selects a transmission method of Case 2b (e.g., 2 PRACH repetition transmissions in an RO on an SBFD symbol). As illustrated in FIG. 12, Level 2 (Case 2b) is a transmission method in which the SS-RSRP is regarded as being greater than the "threshold for PRACH transmission in an SBFD symbol."

### (Level 3)

When PRACH transmission at Level 2 fails, terminal 200 changes to a transmission method (Level 3) for a case where the SS-RSRP is less than the "threshold for PRACH transmission in an SBFD symbol," which is a threshold that is closer (e.g., nearest) to the SS-RSRP and that the SS-RSRP is regarded as exceeding at Level 2. In FIG. 12, there is no PRACH transmission method in an SBFD symbol below Level 2, and since symbol-type change is assumed, terminal 200 changes the symbol type to a non-SBFD symbol and selects a transmission method of Case 1b (e.g., 2 PRACH repetition transmissions in an RO on a non-SBFD symbol). As illustrated in FIG. 12, Level 3 (Case 1b) is a transmission method in which the SS-RSRP is regarded as being equal to or greater than the "threshold for 4 PRACH repetitions in a non-SBFD symbol."

### (Level 4)

When PRACH transmission at Level 3 fails, terminal 200 changes to a transmission method (Level 4) for a case where the SS-RSRP is less than the "threshold for 4 PRACH repetitions in a non-SBFD symbol," which is a threshold that is closer (e.g., nearest) to the SS-RSRP and that the SS-RSRP is regarded as exceeding at Level 3. For example, terminal 200 selects a transmission method of Case 1c (e.g., 4 PRACH repetition transmissions in an RO on a non-SBFD symbol). As illustrated in FIG. 12, Level 4 (Case 1c) is a transmission method in which the SS-RSRP is regarded as being equal to or greater than the "threshold for 8 PRACH repetitions in a non-SBFD symbol."

### (Level 5)

When PRACH transmission at Level 4 fails, terminal 200 changes to a transmission method (Level 5) for a case where the SS-RSRP is less than the "threshold for 8 PRACH repetitions in a non-SBFD symbol," which is a threshold that is closer (e.g., nearest) to the SS-RSRP and that the SS-RSRP is regarded as exceeding at Level 4. For example, terminal 200 selects a transmission method of Case 1d (e.g., 8 PRACH repetition transmissions in an RO on a non-SBFD symbol).

The example of changing a transmission method when PRACH transmission fails has been described above.

As described above, according to Method 4, after a failure of PRACH transmission, when transmitting PRACH again, terminal 200 can increase the likelihood of successful PRACH transmission by performing PRACH transmission after changing to a transmission method (level) used in a case where the SS-RSRP is lower than an actually measured SS-RSRP value. This makes it possible to reduce the latency time required for a RACH procedure.

### <Method 5>

In Method 5, terminal 200 selects an RO to be used for PRACH transmission, based on a comparison between thresholds for each RO type and received power of a signal (e.g., SS-RSRP).

The RO type may be configured, for example, in association with a configuration for configuring the RO. For each RO type, a different threshold for PRACH transmission and a different threshold for the number of PRACH repetitions may be configured. Further, a plurality of RO types may be configured within an SBFD symbol.

Terminal 200 (e.g., SBFD-aware terminal) selects an RO in accordance with the following procedure. The following procedure is obtained and applied by extending the procedure of Method 1 and replacing "selection of a symbol type" with "selection of an RO type." Further, the RO type is not limited to two types, and may correspond to three or more RO types. Note that, when PRACH repetition is not applied, terminal 200 may perform Step 1 and need not perform Step 2. Further, in Method 5, methods other than Method 1 are also applicable by replacing "selection of a symbol type" with "selection of an RO type."

### (Step 1)

Terminal 200 selects an RO of an RO type corresponding to a threshold, among thresholds for PRACH transmission associated with a plurality of RO types, for which the SS-RSRP is equal to or greater than the threshold and which is closer in value to the SS-RSRP (e.g., nearest to the SS-RSRP).

For example, terminal 200 may perform the following operations.

When the SS-RSRP is equal to or greater than a threshold for PRACH transmission of one RO type, terminal 200 selects an RO of the RO type corresponding to the threshold.

When the SS-RSRP is equal to or greater than thresholds for PRACH transmission of a plurality of RO types, terminal 200 selects an RO of an RO type corresponding to a threshold for which the SS-RSRP is equal to or greater than the threshold and which is closer in value to the SS-RSRP (e.g., nearest to the SS-RSRP).

When the SS-RSRP is less than thresholds for PRACH transmission of all RO types, terminal 200 does not transmit PRACH.

### (Step 2)

When a threshold for the number of PRACH repetitions is configured for an RO type corresponding to the RO selected in Step 1, terminal 200 determines the number of PRACH repetitions based on a comparison between the SS-RSRP and the threshold for the number of PRACH repetitions.

The example of the procedure for selecting a PRACH resource (RO) and determining the number of PRACH repetitions in terminal 200 has been described above.

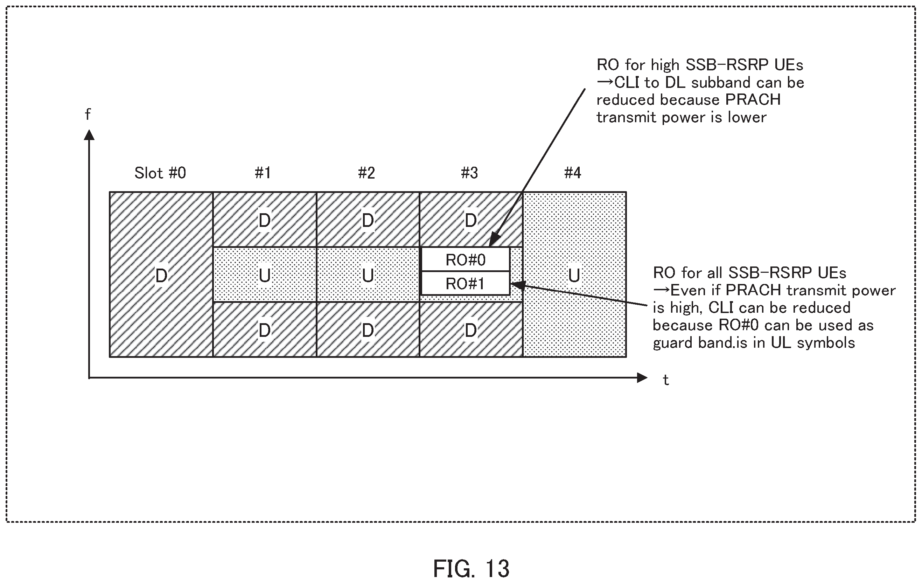

FIG. 13 illustrates an arrangement example of ROs based on Method 5. Note that, in FIG. 13, PRACH repetition is not described for the sake of simplicity of description.

In the example of FIG. 13, in Slot #3, an RO resource (RO #0) corresponding to RO type #0 and an RO resource (RO #1) corresponding to RO type #1 are configured. As illustrated in FIG. 13, RO #0 is adjacent to a DL subband. Further, as illustrated in FIG. 13, RO #1 is adjacent to RO #0 and is not adjacent to the DL subband.

Here, a case will be described where a threshold for PRACH transmission in RO type #0 is configured to be higher than a threshold for PRACH transmission in RO type #1.

In this case, in an SBFD-aware terminal, terminal 200 with a high SS-RSRP (e.g., when the SS-RSRP is equal to or greater than the threshold for PRACH transmission in RO type #0) selects RO #0 and transmits PRACH in RO #0. Further, terminal 200 with a low SS-RSRP (e.g., when the SS-RSRP is less than the threshold for PRACH transmission in RO type #0 and the SS-RSRP is equal to or greater than the threshold for PRACH transmission in RO type #1) selects RO #1 and transmits PRACH in RO #1.

For example, the higher the SS-RSRP is, the lower the UL transmission power at terminal 200 may be. Thus, even when PRACH transmission (UL transmission) is performed in RO #0, the impact on other subbands (e.g., DL subband) is small, and therefore inter-terminal interference can be kept low.

On the other hand, the lower the SS-RSRP is, the higher the UL transmission power at terminal 200 is expected to be, and thus PRACH transmission power in RO #1 becomes higher than PRACH transmission power in RO #0, and inter-terminal interference may increase. In contrast, as illustrated in FIG. 13, the frequency resource used for PRACH transmission in RO #1 is located farther away from the frequency resource of the DL subband than the frequency resource used for PRACH transmission in RO #0. Therefore, when the SS-RSRP is low (e.g., when the SS-RSRP is less than the threshold for PRACH transmission in RO type #0 and the SS-RSRP is equal to or greater than the threshold for PRACH transmission in RO type #1), inter-terminal interference caused by PRACH transmission (UL transmission) in RO #1 with respect to reception in the DL subband (DL reception) can be reduced.

For example, a guard band between channels is used to reduce inter-channel interference by separating (increasing a distance between) resources used for transmission and reception. Similarly, in Method 5, as illustrated in FIG. 13, when PRACH is transmitted in RO #1, the resource of RO #0 can be used in a manner similar to a guard band between PRACH transmission (UL transmission) and reception in the DL subband (DL reception), and thus inter-terminal interference can be reduced. In this manner, even within the same symbol (e.g., SBFD symbol), by arranging Ros of different RO types depending on, for example, a positional relationship with a DL subband, inter-terminal interference in PRACH transmission on an SBFD symbol can be reduced.

As described above, according to Method 5, by individually configuring a threshold for PRACH transmission and a threshold for the number of PRACH repetitions for each RO type, terminal 200 selects which RO of RO types is to be used to perform PRACH transmission and PRACH repetition transmission. This makes it possible to reduce inter-terminal interference on an SBFD symbol and to improve DL reception performance in an SBFD symbol.

Further, Method 5 can reduce inter-terminal interference while being limited to ROs within an SBFD symbol, and thus an impact on a non-SBFD-aware terminal can be reduced. For example, since an SBFD-aware terminal with a low SS-RSRP need not use an RO on a non-SBFD symbol, inter-terminal interference can be reduced without increasing a collision probability when a non-SBFD-aware terminal transmits PRACH.

Note that, in FIG. 13, as one example, an example has been described in which a plurality of ROs are arranged within one SBFD symbol. However, the present disclosure is not limited thereto, and Method 5 is also applicable, for example, when an RO is arranged in each of a plurality of SBFD symbols.

The exemplary methods for selecting a PRACH resource have been described above.

As described above, in the present embodiment, terminal 200 selects, in a plurality of symbols including an SBFD symbol, an RO (transmission opportunity) to be used for PRACH transmission, based on thresholds for SS-RSRP, and transmits a PRACH signal using the selected RO. This makes it possible to reduce inter-terminal interference in PRACH transmission in an SBFD symbol. Therefore, according to the present embodiment, efficiency of PRACH resource selection can be improved.

### (Other embodiments)

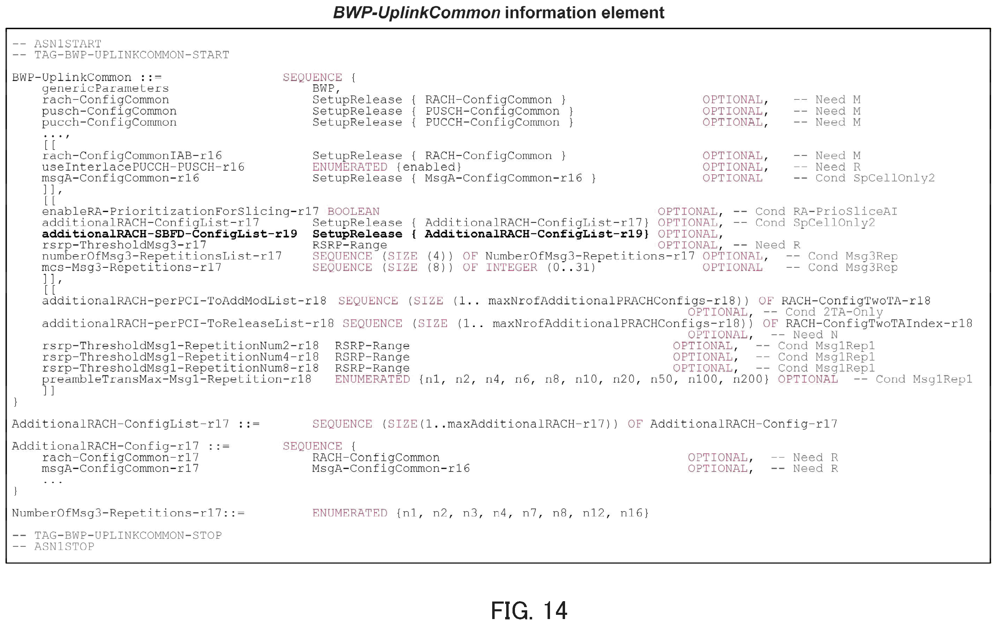

(1) In one embodiment of the present disclosure, as PRACH resource configuration for SBFD-aware terminals, for example, a configuration as illustrated in FIG. 14 may be assumed. In FIG. 14, "additionalRACH-SBFD-ConfigList-r19" is an example of PRACH configuration for SBFD-aware terminals. For example, in FIG. 14, PRACH resources are configured for non-SBFD-aware terminals by "rach-ConfigCommon" or "additionalRACH-ConfigList-r17," and PRACH resources are configured for SBFD-aware terminals by "additionalRACH-SBFD-ConfigList-r19." PRACH resource configuration for SBFD-aware terminals is realized by adding different parameters for SBFD-aware terminals.
(2) In one embodiment of the present disclosure, in order to reduce inter-terminal interference in SBFD symbols, limitation of PRACH transmission power may be applied in combination. For example, as a method for limiting PRACH transmission power, a power offset when transmitting PRACH in SBFD symbols may be applied. For example, the following Equation 1 may be applied.
[1] ${P}_{PRACH , b , f , c} \left(i\right) = min \left\{{P}_{CMAX , f , c}\left(i\right),{P}_{PRACH , target , f , c}+{PL}_{b , f , c}+sbfd_offset\right\} \left[dBm\right]$ (Equation 1)

Here, P_{PRACH,b,f,c}(i) represents PRACH transmission power in active UL BWP "b," carrier "f," cell "c," and transmission opportunity "i," P_{CMAX,f,c} represents maximum transmission power of a terminal, P_{PRACH,target,f,c} represents target received power configured from a higher layer, and PL_{b,f,c} represents pathloss. Further, sbfd_offset represents a power offset applied to SBFD symbols.

For example, by configuring a negative value for sbfd_offset, PRACH transmission power can be reduced as compared with non-SBFD symbols to which sbfd_offset is not applied. Note that, when transmitting a plurality of PRACHs by PRACH repetition, transmission power may be different for each RO. In addition to reduction of inter-terminal interference by PRACH resource selection, by applying limitation of PRACH transmission power, inter-terminal interference due to PRACH transmission can be further reduced.

(3) In one embodiment of the present disclosure, instead of thresholds for SBFD symbols (e.g., threshold for PRACH transmission and threshold for the number of PRACH repetitions) and thresholds for non-SBFD symbols (e.g., threshold for PRACH transmission and threshold for the number of PRACH repetitions), "threshold for RO for SBFD-aware terminal" and "threshold for RO for non-SBFD-aware terminal (or threshold for shared RO)" may be used. For example, these thresholds may be defined as follows. Hereinafter, as an example, a variation in Method 1 is illustrated.

### <Threshold for PRACH transmission in RO for SBFD-aware terminal>

For example, when the SS-RSRP is equal to or greater than the threshold, terminal 200 may transmit PRACH in RO for SBFD-aware terminals associated with the threshold. The threshold may be configured by an individual parameter associated with RO for SBFD-aware terminals, and, for example, a higher-layer parameter associated with RO for SBFD-aware terminals (e.g., rsrp-ThresholdSSB in RACH-ConfigCommon IE) may be reused.

### <Threshold for PRACH transmission in RO (or shared RO) for non-SBFD-aware terminals>

For example, when the SS-RSRP is equal to or greater than the threshold, terminal 200 may transmit PRACH in RO for non-SBFD-aware terminals. The threshold may be configured by an individual parameter associated with RO for non-SBFD-aware terminals, and, for example, a higher-layer parameter associated with RO for non-SBFD-aware terminals (e.g., rsrp-ThresholdSSB in RACH-ConfigCommon IE) may be reused.

### <Threshold for number of PRACH repetitions in RO for SBFD-aware terminal>

For example, when the SS-RSRP is less than the threshold, terminal 200 may perform repetition transmission of PRACH for the number of times corresponding to the threshold, in ROs associated with the threshold, using ROs for SBFD-aware terminals. Note that this threshold may be used when RACH repetition is applied.

### <Threshold for number of RACH repetitions in RO (or shared RO) for non-SBFD-aware terminals>

When the SS-RSRP is less than the threshold, terminal 200 may perform repetition transmission of PRACH for the number of times corresponding to the threshold, in ROs associated with the threshold, using ROs for non-SBFD-aware terminals. Note that this threshold may be used when RACH repetition is applied.

### Examples of the thresholds have been described above.

Terminal 200 (e.g., SBFD-aware terminal) selects an RO by the following procedure using the above thresholds. Hereinafter, as an example, a variation in Method 1 is illustrated. In the following, as RO types, "RO for SBFD-aware terminal" and "RO for non-SBFD-aware terminal" are represented.

### (Step 1)

Terminal 200 selects an RO type (e.g., RO for SBFD-aware terminal or RO for non-SBFD-aware terminal) corresponding to a threshold, among "threshold for PRACH transmission in RO for SBFD-aware terminal" and "threshold for PRACH transmission in RO for non-SBFD-aware terminal," for which the SS-RSRP is equal to or greater than the threshold and which is closer in value to the SS-RSRP (e.g., nearest).

### (Step 2)

When a threshold for the number of PRACH repetitions is configured for the RO type selected in Step 1, terminal 200 determines the number of PRACH repetitions based on the SS-RSRP.

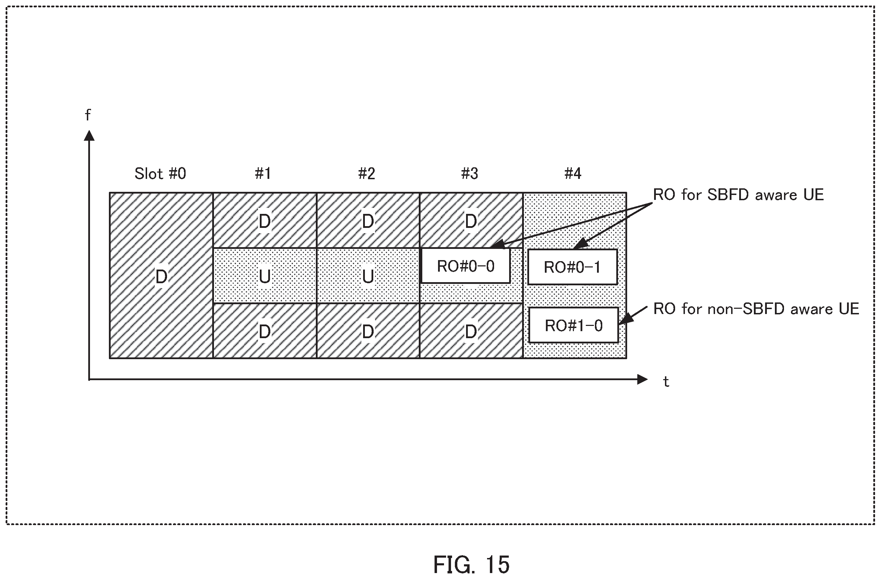

FIG. 15 illustrates an example of use of RO for SBFD-aware terminals and RO for non-SBFD-aware terminals.

In FIG. 15, RO #0-0 and RO #0-1 are ROs for SBFD-aware terminals, and RO #1-0 is an RO for non-SBFD-aware terminals. As illustrated in FIG. 15, ROs for SBFD-aware terminals can be mapped not only in SBFD symbols but also in non-SBFD symbols. Since PRACH transmission processing in an SBFD-aware terminal can be separated, including non-SBFD symbols, from existing processing (e.g., PRACH transmission processing in non-SBFD-aware terminal), complexity (e.g., association between SSB and RO, allocation of RO in PRACH repetition transmission, and the like) when an SBFD-aware terminal uses RO on non-SBFD symbols can be reduced as compared with a case of separating by symbol type.
(4) In one embodiment of the present disclosure, definition of a threshold is not limited to the above-described examples, and for example, instead of "threshold for PRACH transmission in SBFD symbols," definition of "threshold for single PRACH transmission in SBFD symbols" (e.g., threshold for PRACH transmission without repetition in SBFD symbols) may be used. Further, for example, instead of "threshold for PRACH transmission in non-SBFD symbols," definition of "threshold for single PRACH transmission in non-SBFD symbols" (e.g., threshold for PRACH transmission without repetition in non-SBFD symbols) may be used.
(5) In one embodiment of the present disclosure, a measurement value (e.g., received power) to be compared with a threshold is not limited to SS-RSRP, and may be another measurement value (measurement quantity). For example, a threshold based on another measurement quantity instead of SS-RSRP may be applied. For example, a threshold for SS-Reference Signal Received Quality (RSRQ) (or SSB-RSRQ), SSB-Signal to Interference and Noise Ratio (SINR) (or SS-SINR), Channel State Information (CSI)-RSRP, CSI-RSRQ, or CSI-SINR may be applied.

Further, a parameter used in selection of PRACH resources (ROs) is not limited to a measurement value such as SS-RSRP, and a method based on whether a position of terminal 200 is a cell edge may be used. For example, as terminal 200 is closer to a cell edge, UL transmission power tends to be configured higher. Then, for example, "when the SS-RSRP is less than the threshold" in the above-described embodiments may be replaced with "when terminal 200 is located at a cell edge," and "when the SS-RSRP is equal to or greater than the threshold" may be replaced with "when terminal 200 is not located at a cell edge." Note that the position of terminal 200 may be estimated from, for example, received power, or may be specified from information related to the position of terminal 200.

(6) In the above-described embodiments, a unit of a time-domain resource is not limited to a symbol and a slot, and may be another time-domain resource, or may be another combination of time-domain resources.

Further, in the above-described embodiment, a case where SBFD is applied has been described, but one exemplary embodiment of the present disclosure may be applied without being limited to SBFD as long as the transmission direction (e.g., DL or UL) is configured for the plurality of bands (e.g., subbands) into which the frequency band is divided.

Further, in the above-described embodiments, values such as the number of subbands, the number of DL subbands, the number of UL subbands, the number of slots, the number of symbols, and the number of repetitions are merely examples and are not limited thereto. Further, the subband configurations used in the embodiments described above are merely examples, and the number of subbands, the arrangement order of a DL subband and a UL subband are not limited thereto.

### (Supplementary Note)

Information indicating whether terminal 200 supports the functions, operations, or pieces of processing that have been indicated in the above-mentioned embodiments may be transmitted (or indicated) from terminal 200 to base station 100, as capability information or a capability parameter for terminal 200, for example.

The capability information may include an information element (IE) individually indicating whether terminal 200 supports at least one of the functions, operations, or processes described in the above-described embodiments. Alternatively, the capability information may include an information element indicating whether terminal 200 supports a combination of any two or more of the functions, operations, and processing described in the above embodiments.

Base station 100 may determine (or assume) the function, operation, or process supported (or not supported) by terminal 200 of the transmission source of the capability information, based on the capability information received from terminal 200, for example. Base station 100 may execute operations, processes, or control in accordance with a determination result based on the capability information. For example, base station 100 may control the resource configuration of a random access channel based on capability information received from terminal 200.

Note that the fact that terminal 200 does not support some of the functions, operations, or processes described in the above-described embodiments may be read as that some of the functions, operations, or processes are limited in terminal 200. For example, information or a request relating to such limitation may be indicated to base station 100.

The information related to the capability or the limitation of terminal 200 may be defined by standards or may be implicitly indicated to base station 100 in association with information known in base station 100 or information to be transmitted to base station 100, for example.

### (Control Signals)

In the present disclosure, the downlink control signal (or downlink control information) relating to one exemplary embodiment of the present disclosure may be a signal (or information) transmitted in a Physical Downlink Control Channel (PDCCH) in a physical layer, for example, or may be a signal (or information) transmitted in a Medium Access Control Control Element (MAC CE) or Radio Resource Control (RRC) in a higher layer. Further, the signal (or information) is not limited to that indicated by the downlink control signal, but may be predefined in the specifications (or standard) or may be pre-configured for the base station and the terminal.

In the present disclosure, an uplink control signal (or uplink control information) relating to an exemplary embodiment of the present disclosure may be, for example, a signal (or information) transmitted through a PUCCH of the physical layer or a signal (or information) transmitted through the MAC CE or RRC of the higher layer. Further, the signal (or information) is not limited to that indicated by the uplink control signal, and may be predefined in the specifications (or standard) or may be pre-configured for the base station and the terminal. The uplink control signal may be replaced with, for example, uplink control information (UCI), 1st stage sidelink control information (SCI), or 2nd stage SCI.

### (Base Station)

In one exemplary embodiment of the present disclosure, the base station may be a transmission reception point (TRP), a clusterhead, an access point, a remote radio head (RRH), an eNodeB (eNB), a gNodeB (gNB), a base station (BS), a base transceiver station (BTS), a base unit, or a gateway, for example. Further, in sidelink communication, a terminal may play a role of a base station. Furthermore, instead of the base station, a relay apparatus that relays communication between a higher node and a terminal may be used. Moreover, a road side device may be used.

### (Uplink/Downlink/Sidelink)

One exemplary embodiment of the present disclosure may be applied to, for example, any of an uplink, a downlink, and a sidelink. For example, one exemplary embodiment of the present disclosure may be applied to an uplink Physical Uplink Shared Channel (PUSCH), Physical Uplink Control Channel (PUCCH), or Physical Random Access Channel (PRACH), a downlink Physical Downlink Shared Channel (PDSCH), PDCCH, or Physical Broadcast Channel (PBCH), or a sidelink Physical Sidelink Shared Channel (PSSCH), Physical Sidelink Control Channel (PSCCH), or Physical Sidelink Broadcast Channel (PSBCH).

Note that the PDCCH, PDSCH, PUSCH, and PUCCH are examples of a downlink control channel, a downlink data channel, an uplink data channel, and an uplink control channel, respectively. Further, PSCCH and PSSCH are examples of a sidelink control channel and a sidelink data channel, respectively. Further, PBCH and PSBCH are examples of broadcast channels, and PRACH is an example of a random access channel.

### (Data Channels/Control Channels)

One exemplary embodiment of the present disclosure may be applied to, for example, any of a data channel and a control channel. For example, a channel in an exemplary embodiment of the present disclosure may be replaced with any one of PDSCH, PUSCH, and PSSCH being the data channels, or PDCCH, PUCCH, PBCH, PSCCH, and PSBCH being the control channels.

### (Reference Signals)

In one exemplary embodiment of the present disclosure, a reference signal is a signal known to both of a base station and a mobile station, for example, and may also be referred to as a Reference Signal (RS) or a pilot signal. The reference signal may be any of a Demodulation Reference Signal (DMRS), a Channel State Information-Reference Signal (CSI-RS), a Tracking Reference Signal (TRS), a Phase Tracking Reference Signal (PTRS), a Cell-specific Reference Signal (CRS), or a Sounding Reference Signal (SRS).

### (Time Intervals)

In one exemplary embodiment of the present disclosure, the units of time resources are not limited to one or a combination of slots and symbols, but may be time resource units such as, for example, frames, superframes, subframes, slots, time slot subslots, minislots, or symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

One exemplary embodiment of the present disclosure may be applied to either a licensed band or an unlicensed band.

### (Communication)

One exemplary embodiment of the present disclosure may be applied to any of communication between a base station and a terminal (Uu link communication), communication between a terminal and a terminal (Sidelink communication), and communication of a Vehicle to Everything (V2X). For example, a channel in an exemplary embodiment of the present disclosure may be replaced with any of PSCCH, PSSCH, Physical Sidelink Feedback Channel (PSFCH), PSBCH, PDCCH, PUCCH, PDSCH, PUSCH, and PBCH.

Further, one exemplary embodiment of the present disclosure may be applied to any of a terrestrial network or a network (Non-Terrestrial Network (NTN)) other than a terrestrial network using a satellite or a High Altitude Pseudo Satellite (HAPS). Further, one exemplary embodiment of the present disclosure may be applied to a network having a large cell size, and a terrestrial network with a large latency compared with a symbol length or a slot length, such as an ultra-wideband transmission network.

### (SBFD)

In one embodiment of the present disclosure, an operation for an uplink, downlink, or sidelink symbol may be applied to a symbol (e.g., SBFD symbol) in which an operation or control of SBFD (Subband non-overlapping full duplex, Subband full duplex) is performed. In an SBFD symbol, a frequency domain (or frequency resource, frequency band) is divided into a plurality of frequency domains (e.g., also referred to as subbands, RB sets, sub-bands, or sub-BWP (Bandwidth part)). A terminal performs transmission and reception in different directions (e.g., downlink or uplink) in units of subbands, which are divided domains. In an SBFD symbol, a terminal may perform transmission or reception in only one direction of uplink or downlink and need not perform transmission and reception in the other direction. In contrast, a base station may be capable of simultaneously transmitting and receiving uplink and downlink. An SBFD symbol may have a smaller frequency domain that can be used for downlink than a symbol in which transmission and reception are performed only for downlink. Further, an SBFD symbol may have a small frequency domain that can be used for uplink, compared with a symbol in which transmission and reception are performed only for uplink.

Further, in an SBFD symbol, a terminal may simultaneously transmit and receive uplink and downlink. In that case, a frequency domain in which the terminal transmits and a frequency domain in which the terminal receives need not be adjacent and may have a frequency interval (also referred to as frequency gap) therebetween.

Further, as a different transmission and reception direction in units of subbands, which are divided domains, transmission and reception of sidelink may be included.

### (XDD: cross division duplex)

In one embodiment of the present disclosure, an operation for an uplink, downlink, or sidelink symbol may be applied to a symbol (e.g., full duplex symbol) in which an operation or control of full duplex is performed. In a full duplex symbol, both a terminal and a base station can simultaneously transmit and receive uplink and downlink. In a full duplex symbol, a terminal and a base station may simultaneously transmit and receive in an available frequency domain (or frequency resource, frequency band), or may simultaneously transmit and receive in a part of a frequency domain (that is, in another frequency domain, an operation of transmitting or receiving may be performed). In that case, a frequency domain in which the base station or the terminal transmits and a frequency domain in which the base station or the terminal receives need not be adjacent and may have a frequency interval (also referred to as frequency gap) therebetween. Further, for example, for the purpose of reducing interference, an operation in which either one of a terminal and a base station simultaneously transmits and receives may be performed (that is, the other may perform an operation of transmitting or receiving).

Further, the operation of full duplex may be applied to an operation in which the terminal can simultaneously transmit and receive sidelink. Further, an operation of full duplex may be applied to an operation in which the terminal can simultaneously transmit and receive sidelink and uplink or downlink.

### (Antenna Ports)

In one exemplary embodiment of the present disclosure, an antenna port refers to a logical antenna (antenna group) formed of one or more physical antenna(s). For example, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### <5G NR System Architecture and Protocol Stack>

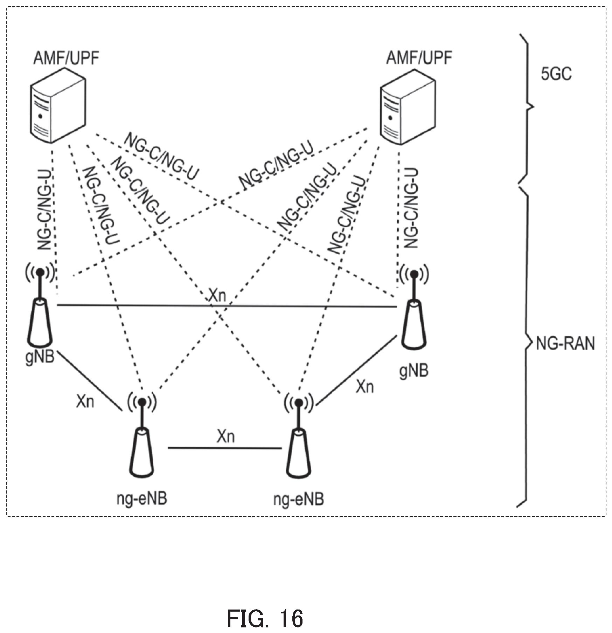

A 5G NR system architecture assumes, as a whole, a Next Generation - Radio Access Network (NG-RAN) including the gNB. The gNB provides the NG-radio access user plane (SDAP/PDCP/RLC/MAC/PHY) and control plane (RRC) protocol terminations towards the UE. The gNBs are interconnected with each other by means of an Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 16 (see e.g., 3GPP TS 38.300 v15.6.0, section 4).

### <RRC Connection Setup and Reconfiguration Procedure>

Interaction between UE, gNB, and AMF (5GC entity) in a NAS part when a UE transitions from RRC_IDLE to RRC_CONNECTED is shown (see TS 38.300 v15.6.0).

The RRC is higher layer signaling (protocol) used to configure the UE and gNB. The AMF prepares UE context data (which includes, e.g., PDU session context, security key, UE Radio Capability, UE security capabilities, and the like) and transmits the UE context data to the gNB together with an initial context setup request (INITIAL CONTEXT SETUP REQUEST). Then, the gNB activates the AS security with the UE. This activation is performed by the gNB transmitting to the UE a SecurityModeCommand message and by the UE responding to the gNB with the SecurityModeComplete message. Afterwards, the gNB performs the reconfiguration to setup the Signaling Radio Bearer 2 (SRB2) and Data Radio Bearer(s) (DRB(s)) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB indicates to the AMF that the setup procedure is completed with INITIAL CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which in operation, transmits an initial context setup message to the gNodeB via the NG connection such that a signaling radio bearer between the gNodeB and a User Equipment (UE) is set up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

### <QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU sessions. For each UE, in accordance with the PDU session, the NG-RAN establishes, for example, at least one Data Radio Bearers (DRB). Further, additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### (Open-RAN)

A base station (e.g., 5G NR base station referred to as gNB) described in each embodiment may be configured by three functional modules of Centralized Unit (CU), Distributed Unit (DU), and Radio Unit (RU).

The CU may be referred to as, for example, a centralized node, an aggregation node, a centralized station, an aggregation station, or a centralized unit. The DU may be referred to as, for example, an O-RAN Distributed Unit (O-DU), a distributed node, a distributed station, or a distributed unit. The RU may be referred to as, for example, an O-RAN Radio Unit (O-RU), a radio device, a radio node, a radio station, an antenna unit, or a radio unit.

For a functional split configuration (or functional split point) between a CU, a DU, and an RU, a plurality of split options are specified. The term "functional split point" may also be referred to as "split," "option," or "split option."

As an example of "split option," the following split options 1 to 8 may be exemplified. Functions of the base station described in each embodiment may be split into a CU, a DU, and an RU according to any of the following split options 1 to 8. For example, the functions may be split among the CU, the DU, and the RU, or may be split only between the CU and the DU or only between the DU and the RU.
(1) Split option 1: between radio resource control (RRC) and PDCP
(2) Split option 2: between PDCP and RLC (High-RLC)
(3) Split option 3: between High-RLC and Low-RLC
(4) Split option 4: between RLC (Low-RLC) and MAC (High-MAC)
(5) Split option 5: between High-MAC and Low-MAC
(6) Split option 6: between MAC (Low-MAC) and PHY (High-PHY)
(7) Split option 7: between High-PHY and Low-PHY
(8) Split option 8: between PHY (Low-PHY) and RF

A functional split point between a CU and an O-DU may be Split Option 2. The section between a CU and an O-DU is referred to as midhaul, and the F1 interface is specified by 3GPP. Further, the section between an O-DU and an O-RU is referred to as fronthaul, and its functional split point may be Split Option 7-2x adopted as the O-RAN fronthaul specification.

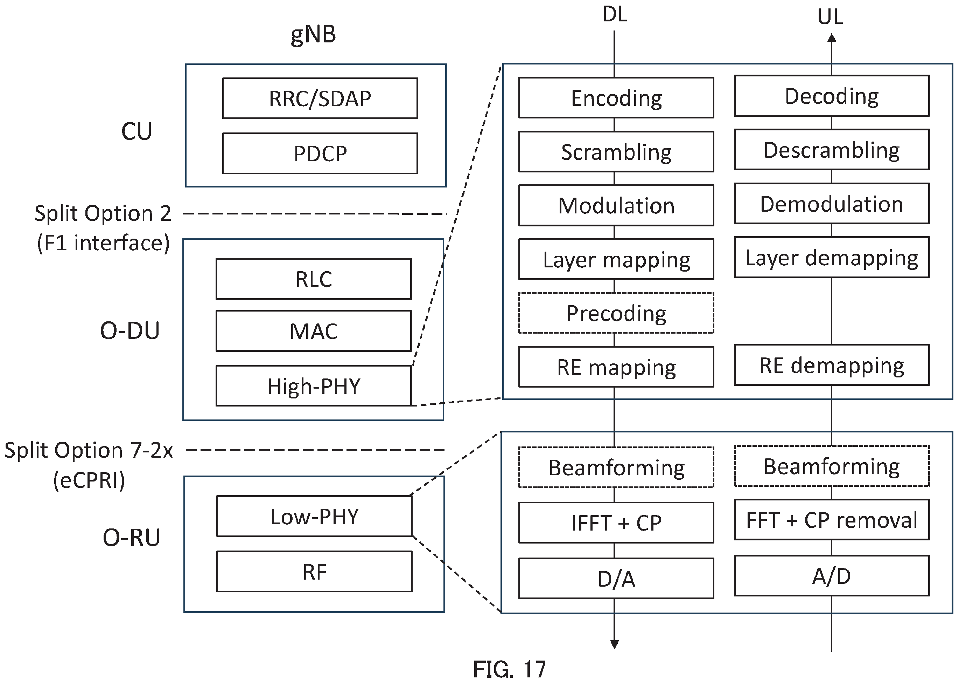

FIG. 17 illustrates an example in which the base station functions of gNB are functionally split into a CU, an O-DU, and an O-RU by Split Option 2 and Split Option 7-2x.

The CU may include, for example, a radio resource control (RRC) function, a service data adaptation protocol (SDAP) function, and a packet data convergence protocol (PDCP) function.

The O-DU may include, for example, a radio link control (RLC) function, a MAC function, and a higher physical layer (HIGH-PHY) function. Further, the HIGH-PHY function may include, for downlink (DL) transmission, an encoding function, a scrambling function, a modulation function, a layer mapping function, a precoding function, and a resource element (RE) mapping function. Further, the HIGH-PHY function may include, for uplink (UL) reception, a decoding function, a descrambling function, a demodulation function, a layer demapping function, and a resource element (RE) demapping function.

The O-RU may include, for example, a LOW-PHY function and an RF function. Further, the LOW-PHY function may include, for DL transmission, a beamforming function, an Inverse Fast Fourier Transform (IFFT) + Cyclic Prefix (CP) adding function, and a Digital to Analog (D/A) conversion function. Further, the LOW-PHY function may include, for UL reception, an Analog to Digital (A/D) conversion function, a CP removal + Fast Fourier Transform (FFT) function, and a beamforming function.

Note that, when the O-DU does not include a precoding function, the O-RU may include a precoding function.

The O-RU may have a function related to listen before Talk (LBT).

As a communication scheme between the O-DU and the O-RU in Split Option 7-2x, an Evolved Common Public Radio Interface (eCPRI) is specified.

In Split Option 7-2x, in eCPRI, in addition to a sampling sequence of in-phase (I) and quadrature (Q) components of an OFDM signal in the frequency domain, information used for beamforming in an antenna, a time synchronization signal, and the like are transmitted and received.

Information transmitted using signals (PDCCH, PUCCH, PDSCH, PUSCH, MAC CE, RRC, etc.) described in each embodiment may be transmitted between the O-DU and the O-RU via the User Plane (U-Plane) of eCPRI or the Control Plane (C-Plane).

In a case where a function described in each embodiment is executed in the O-RU due to functional split, the O-DU may control the O-RU by transmitting information for controlling the function by a control signal (e.g., eCPRI) between the O-DU and the O-RU.

In a case where a function described in each embodiment is executed in the O-DU due to functional split, the O-RU may receive, by a control signal (e.g., eCPRI), a result of executing the function in the O-DU, and may control the O-RU based on the received result.

The CU, the O-DU, and the O-RU may be deployed in physically different apparatuses in which respective functions are connected by optical fiber or the like, or some or all of the functions may be deployed in a physically same apparatus.

The CU and the O-DU may be logical entities implemented as software operating on a server such as a cloud as virtualized RAN (virtual Radio Access Network: vRAN). Further, some or all of functions of the CU and the O-DU may be provided as services of virtualized network functions (Network Functions Virtualization: NFV).

A transceiver need not be a radio transceiver, and may be, for example, a network transceiver, an optical transceiver, or the like. A radio resource allocated by the O-DU may be a resource for radio communication between the O-RU and a UE.

The present disclosure can be realized by software, hardware, or software in cooperation with hardware.

Each functional block used in the description of each embodiment described above can be partly or entirely realized by an LSI such as an integrated circuit, and each process described in each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. Further, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smartphone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

A terminal according to an embodiment of the present disclosure includes: control circuitry, which, in operation, selects, in a plurality of time resources including a first time resource having a frequency band divided into a plurality of bands, a transmission opportunity of a random access channel based on a threshold for received power; and transmission circuitry, which, in operation, transmits a signal of the random access channel using the transmission opportunity.

In the embodiment of the present disclosure, the control circuitry selects the transmission opportunity based on a first threshold related to transmission of the random access channel in the first time resource and a second threshold related to transmission of the random access channel in a second time resource different from the first time resource.

In the embodiment of the present disclosure, the control circuitry selects a plurality of the transmission opportunities in either the first time resource or the second time resource, in a case where the control circuitry repeatedly transmits the signal.

In the embodiment of the present disclosure, the control circuitry selects a plurality of the transmission opportunities in both the first time resource and the second time resource, in a case where the control circuitry repeatedly transmits the signal.

In the embodiment of the present disclosure, the control circuitry selects the transmission opportunity based on a first threshold related to transmission of the random access channel in the first time resource, a second threshold related to transmission of the random access channel in a second time resource different from the first time resource, and a rule related to a priority order of the first time resource and the second time resource.

In the embodiment of the present disclosure, the control circuitry selects, in a case where transmission of the signal fails, the transmission opportunity to be used for retransmission of the signal, based on comparisons between a power value lower than the received power and the first threshold, and between the power value and the second threshold.

In the embodiment of the present disclosure, the control circuitry selects the transmission opportunity based on a threshold for each type of the transmission opportunity.

A base station according to an embodiment of the present disclosure includes: control circuitry, which, in operation, in a plurality of time resources including a first time resource having a frequency band divided into a plurality of bands, configures a transmission opportunity of a random access channel, the transmission opportunity being selected based on a threshold for received power of a terminal; and reception circuitry, which, in operation, receives a signal of the random access channel using the transmission opportunity.

In a communication method according to an embodiment of the present disclosure, a terminal selects, in a plurality of time resources including a first time resource having a frequency band divided into a plurality of bands, a transmission opportunity of a random access channel based on a threshold for received power, and transmits a signal of the random access channel using the transmission opportunity.

In a communication method according to an embodiment of the present disclosure, a base station configures, in a plurality of time resources including a first time resource having a frequency band divided into a plurality of bands, a transmission opportunity of a random access channel, the transmission opportunity being selected based on a threshold for received power of a terminal, and receives a signal of the random access channel using the transmission opportunity.

The disclosure of Japanese Patent Application No. 2024-013292, filed on January 31, 2024, including the specification, drawings and abstract, is incorporated herein by reference in its entirety.

### Industrial applicability

An exemplary embodiment of the present disclosure is useful for radio communication systems.

### Reference Signs List

100 Base Station
101, 201 Receiver
102, 202 Demapper
103, 203 Demodulator/Decoder
104 preamble detector
105 Scheduler
106 RO Controller
107, 206 Control information holder
108, 208 Data/control information generator
109, 209 Encoder/Modulator
110, 210 Mapper
111, 211 Transmitter
200 Terminal
204 RO selector
205 Controller
207 Preamble generator

## Claims

1. A terminal, comprising:
control circuitry, which, in operation, selects, in a plurality of time resources including a first time resource having a frequency band divided into a plurality of bands, a transmission opportunity of a random access channel based on a threshold for received power; and
transmission circuitry, which, in operation, transmits a signal of the random access channel using the transmission opportunity.

2. The terminal according to claim 1, wherein
the control circuitry selects the transmission opportunity based on a first threshold related to transmission of the random access channel in the first time resource and a second threshold related to transmission of the random access channel in a second time resource different from the first time resource.

3. The terminal according to claim 2, wherein
the control circuitry selects a plurality of the transmission opportunities in either the first time resource or the second time resource, in a case where the control circuitry repeatedly transmits the signal.

4. The terminal according to claim 2, wherein
the control circuitry selects a plurality of the transmission opportunities in both the first time resource and the second time resource, in a case where the control circuitry repeatedly transmits the signal.

5. The terminal according to claim 1, wherein
the control circuitry selects the transmission opportunity based on a first threshold related to transmission of the random access channel in the first time resource, a second threshold related to transmission of the random access channel in a second time resource different from the first time resource, and a rule related to a priority order of the first time resource and the second time resource.

6. The terminal according to claim 5, wherein
the control circuitry selects, in a case where transmission of the signal fails, the transmission opportunity to be used for retransmission of the signal, based on comparisons between a power value lower than the received power and the first threshold, and between the power value and the second threshold.

7. The terminal according to claim 1, wherein
the control circuitry selects the transmission opportunity based on a threshold for each type of the transmission opportunity.

8. A base station, comprising:
control circuitry, which, in operation, in a plurality of time resources including a first time resource having a frequency band divided into a plurality of bands, configures a transmission opportunity of a random access channel, the transmission opportunity being selected based on a threshold for received power of a terminal; and
reception circuitry, which, in operation, receives a signal of the random access channel using the transmission opportunity.

9. A communication method, comprising:
selecting, by a terminal, in a plurality of time resources including a first time resource having a frequency band divided into a plurality of bands, a transmission opportunity of a random access channel based on a threshold for received power; and
transmitting, by the terminal, a signal of the random access channel using the transmission opportunity.

10. A communication method, comprising:
configuring, by a base station, in a plurality of time resources including a first time resource having a frequency band divided into a plurality of bands, a transmission opportunity of a random access channel, the transmission opportunity being selected based on a threshold for received power of a terminal; and
receiving, by the base station, a signal of the random access channel using the transmission opportunity.
